(19) Europäisches Patentamt / European Patent Office / Office européen des brevets

(11) EP 3 487 895 B1

(12) **EUROPÄISCHE PATENTSCHRIFT**

(45) Veröffentlichungstag und Bekanntmachung des Hinweises auf die Patenterteilung:
**01.02.2023 Patentblatt 2023/05**

(21) Anmeldenummer: **17737550.8**

(22) Anmeldetag: **06.07.2017**

(51) Internationale Patentklassifikation (IPC):
***C08F 265/06*** *(2006.01)* ***C08F 257/02*** *(2006.01)*
***C08F 2/22*** *(2006.01)* ***C08K 3/22*** *(2006.01)*
***C09D 5/02*** *(2006.01)*

(52) Gemeinsame Patentklassifikation (CPC):
(C-Sets verfügbar)
**C08F 257/02; C08F 2/22; C08F 265/06;**
**C09D 5/022;** C08F 220/1804; C08F 220/1808;
C08K 3/22; C08K 2003/2241 (Forts.)

(86) Internationale Anmeldenummer:
**PCT/EP2017/066898**

(87) Internationale Veröffentlichungsnummer:
**WO 2018/015169 (25.01.2018 Gazette 2018/04)**

(54) **VERFAHREN ZUR HERSTELLUNG EINER WÄSSRIGEN POLYMERDISPERSION MIT HOHER CHEMIKALIENBESTÄNDIGKEIT**

PROCESS FOR PREPARING AN AQUEOUS POLYMER DISPERSION HAVING HIGH CHEMICAL RESISTANCE

PROCÉDÉ DE PRÉPARATION D'UNE DISPERSION POLYMÈRE AQUEUSE AYANT UNE RÉSISTANCE AMÉLIORÉE AUX PRODUITS CHIMIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.07.2016 EP 16180296**

(43) Veröffentlichungstag der Anmeldung:
**29.05.2019 Patentblatt 2019/22**

(73) Patentinhaber: **BASF SE**
**67056 Ludwigshafen am Rhein (DE)**

(72) Erfinder:
- **GASCHLER, Wolfgang**
  **67063 Ludwigshafen (DE)**
- **ENCK, Sebastian**
  **68165 Mannheim (DE)**
- **BERKHOUT, Leendert**
  **7828 BG Emmen (NL)**
- **GUITMAN, Linda**
  **8023 AA Zwolle (NL)**
- **KACZUN, Juergen**
  **67157 Wachenheim (DE)**
- **HAJNAL, David**
  **68199 Mannheim (DE)**

(74) Vertreter: **BASF IP Association**
**BASF SE**
**G-FLP-C006**
**67056 Ludwigshafen (DE)**

(56) Entgegenhaltungen:
**EP-A1- 1 505 127** **EP-A1- 2 662 393**
**WO-A1-2013/174894**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**C08F 257/02, C08F 220/14, C08F 212/08, C08F 220/1804, C08F 220/06;**
**C08F 265/06, C08F 212/08, C08F 220/1804, C08F 220/1808;**
**C08F 265/06, C08F 212/08, C08F 220/1804, C08F 220/1808, C08F 222/102;**
C08F 212/08, C08F 220/06, C08F 212/06, C08F 220/1804, C08F 220/14, C08F 220/1808;
C08F 257/02, C08F 220/1808;
C08F 265/06, C08F 220/1808;
C08K 3/22, C08L 51/003

## Beschreibung

Gegenstand der vorliegenden Erfindung ist ein Verfahren zur Herstellung einer wässrigen Polymerdispersion durch radikalisch initiierte wässrige Emulsionspolymerisation, welches dadurch gekennzeichnet ist, dass in einem wässrigen Medium in Gegenwart wenigstens eines Polymeren 1

| | |
|---|---|
| ≤ 5,0 Gew.-% | wenigstens einer α,β-monoethylenisch ungesättigten $C_3$- bis $C_6$-Mono- oder Dicarbonsäure (Monomere A2), |
| ≥ 95 und ≤ 100 Gew.-% | wenigstens einer ethylenisch ungesättigten Verbindung, welche sich von den Monomeren A2 unterscheidet (Monomere B2), |

wobei sich die Mengen der Monomeren A2 und B2 auf 100 Gew.-% aufsummieren, radikalisch polymerisiert werden, mit der Maßgabe, dass

• die Art und Mengen der Monomeren A2 und B2 so gewählt werden, dass das daraus erhaltene Polymer 2 einen Hansch-Parameter ≥ 2,80 und eine Glasübergangstemperatur ≥ 20 °C aufweist,

• das wenigstens eine Polymere 1

| | |
|---|---|
| ≥ 3,0 und ≤ 35 Gew.-% | wenigstens einer α,β-monoethylenisch ungesättigten $C_3$- bis $C_6$-Mono- oder Dicarbonsäure (Monomere A1), und |
| ≥ 65 und ≤ 97,0 Gew.-% | wenigstens einer ethylenisch ungesättigten Verbindung, welche sich von den Monomeren A1 unterscheidet (Monomere B1), |

wobei sich die Mengen der Monomeren A1 und B1 auf 100 Gew.-% aufsummieren, in einpolymerisierter Form enthält,

• dabei die Art und Mengen der Monomeren A1 und B1 so gewählt wurden, dass das wenigstens eine Polymere 1 einen Hansch-Parameter > 1,35 aufweist, und

• das Gewichtsverhältnis des wenigstens einen Polymeren 1 zur Summe der Gesamtmengen an Monomeren A2 und B2 (Gesamtmonomerenmenge 2) im Bereich 15:85 bis 60:40 liegt.

Gegenstand der vorliegenden Erfindung sind ferner die nach dem erfindungsgemäßen Verfahren erhältlichen wässrigen Polymerdispersionen, die daraus durch Trocknung erhältlichen Polymerpulver sowie die Verwendung der wässrigen Polymerdispersionen sowie der Polymerpulver als Bindemittel für verschiedenste Anwendungen, insbesondere zur Herstellung von Beschichtungen mit hoher Lösungsmittelbeständigkeit sowie geringer Anschmutzneigung bzw. hoher Resistenz gegen Fleckenbildung.

Für das erfindungsgemäße Verfahren bzw. für die erfindungsgemäßen wässrigen Polymerdispersionen ist von folgendem Stand der Technik auszugehen.

So offenbart die EP-A 386325 Haftklebstoffformulierungen zu deren Herstellung Emulsionspolymerisate eingesetzt werden, welche durch Emulsionspolymerisation ethylenisch ungesättigter Monomerer in Anwesenheit eines carbonsäuregruppenreichen Polymeren hergestellt werden. Die carbonsäuregruppenreichen Polymeren enthalten zwischen 6 und 30 Gew.-% an ethylenisch ungesättigten Carbonsäuren sowie 70 bis 94 Gew.-% an weiteren ethylenisch ungesättigten Verbindungen in einpolymerisierter Form. Als weitere ethylenisch ungesättigte Verbindungen werden eine Vielzahl von unterschiedlichen Monomeren genannt, wobei in den Beispielen ausschließlich solche carbonsäuregruppenreichen Polymeren offenbart sind, welche zwischen 65 und 70 Gew.-% an n-Butylacrylat in einpolymerisierter Form enthalten und daher Hansch-Parameter von deutlich unter 1,5 aufweisen. Auch liegen die Glasübergangstemperaturen der aus den ethylenisch ungesättigten Monomeren gebildeten Emulsionspolymerisate allesamt bei deutlich unter-10 °C.

Die EP-A 574803 offenbart die Verwendung von wässrigen Polymerdispersionen, enthaltend 5 bis 80 Gew.-% eines Copolymerisats A mit einer Glasübergangstemperatur von 50 bis 150 °C und 20 bis 95 Gew.-% eines Copolymerisats B mit einer Glasübergangstemperatur von -50 °C bis +50 °C, wobei sich die Glasübergangstemperaturen der beiden Copolymerisate um wenigstens 20 °C unterscheiden und wobei mindestens ein Copolymerisat einen Gehalt von 3 bis 70 Gew.-% an ethyenisch ungesättigter Carbonsäure in einpolymerisierter Form aufweist, als siegelbare Beschichtung. Bevorzugt weist das Copolymerisat A die einpolymerisierte Carbonsäure auf. Für die Copolymerisate A und B sind eine Vielzahl von möglichen Comonomeren genannt, wobei in den Beispielen zur Herstellung des Copolymerisats A ≥ 51,5 Gew.-% Styrol oder Methylmethacrylat und zur Herstellung Copolymerisats B als Hauptmonomer n-Butylacrylat eingesetzt wurde, weswegen für die Copolymerisate A Hansch-Parameter im Bereich von unter 1,0 sowie für die Copolymerisate B Glasübergangstemperaturen von deutlich unter 20 °C resultieren.

Gemäß der EP-A 1333074 werden wässrige Druckfarbenformulierungen offenbart, deren Bindemittelpolymere durch Emulsionspolymerisation von ethylenisch ungesättigten Verbindungen in Anwesenheit eines ersten Polymeren hergestellt werden. Dabei soll das erste Polymere 15 bis 75 Gew.-% an ethylenisch ungesättigten Carbonsäuren in

einpolymerisierter Form enthalten und einen Hansch-Parameter im Bereich von 1,3 bis 2,1 aufweisen. Von Bedeutung in diesem Zusammenhang ist jedoch, dass diese Hansch-Parameterwerte nach einer anderen als in dieser Schrift verwendeten Methode errechnet wurden. Unter Anwendung der in dieser Schrift verwendeten Methode werden für die in der ersten Stufe erhaltenen Polymere Hansch-Parameter im Bereich von 0,69 bis 1,21 anstelle von 1,3 bis 2,1 erhalten.

Ferner offenbart die US-A 2008/75868 verschmutzungsresistente Beschichtungszusammensetzungen, deren Bindemittel ein Mehrstufenemulsionspolymerisat darstellt. Wesentlich ist, dass die erste Emulsionspolymerisat 0,5 bis 5 Gew.-%, bevorzugt 1 bis 4 Gew.-% an Carbonsäuremonomer in einpolymerisierter Form enthält und einen Hansch-Parameter > 2,0 aufweist. Das zweite Emulsionspolymerisat ist allgemein dadurch charakterisiert, dass es weniger als die Hälfte der Säuremonomergehaltes des ersten Emulsionspolymerisats enthalten soll und dass sich die Glasübergangstemperarturen der beiden Polymerphasen um maximal 20 °C unterscheiden. Von Bedeutung in diesem Zusammenhang ist, dass gemäß der Angaben aus Tabelle A in allen Ausführungsbeispielen die Glasübergangstemperaturen sowohl für das erste wie auch für das zweite Emulsionspolymerisat deutlich unter 1 °C liegen und der Hansch-Parameter für das zweite Emulsionspolymerisat kleiner 2,6 ist.

Der vorliegenden Erfindung lag daher die Aufgabe zugrunde, alternative bzw. verbesserte Bindemittel für Beschichtungen mit hoher Lösungsmittelbeständigkeit sowie geringer Anschmutzneigung bzw. erhöhte Resistenz gegen Fleckenbildung zur Verfügung zu stellen.

Die Aufgabe wurde gelöst durch eine wässrige Polymerdispersion, welche nach dem eingangs definierten Verfahren zugänglich ist.

Wesentliches Merkmal des Verfahrens ist, dass die radikalisch initiierte wässrige Emulsionspolymerisation der Monomeren A2 und B2 in Gegenwart wenigstens eines Polymeren 1 stattfindet, wobei das wenigstens eine Polymere 1

| | |
|---|---|
| $\geq$ 3,0 und $\leq$ 35 Gew.-% | wenigstens einer $\alpha,\beta$-monoethylenisch ungesättigten $C_3$- bis $C_6$-Mono- oder Dicarbonsäure (Monomere A1), und |
| $\geq$ 65 und $\leq$ 97,0 Gew.-% | wenigstens einer ethylenisch ungesättigten Verbindung, welche sich von den Monomeren A1 unterscheidet (Monomere B1), |

wobei sich die Mengen der Monomeren A1 und B1 auf 100 Gew.-% aufsummieren, in einpolymerisierter Form enthält, und dabei die Art und Mengen der Monomeren A1 und B1 so gewählt wurden, dass das wenigstens eine Polymere 1 einen Hansch-Parameter > 1,35 aufweist.

Als Monomeren A1 kommen alle $\alpha,\beta$-monoethylenisch ungesättigten $C_3$- bis $C_6$-, bevorzugt $C_3$- oder $C_4$-Mono- oder Dicarbonsäure in Betracht. Erfindungsgemäß umfasst sein sollen dabei ebenfalls die voll- oder teilneutralisierten wasserlöslichen Salze, insbesondere die Alkalimetall- oder Ammoniumsalze der vorgenannten Carbonsäuren. Genannt seien beispielsweise Acrylsäure, Methacrylsäure, Ethylacrylsäure, Itaconsäure, Allylessigsäure, Crotonsäure, Vinylessigsäure, Fumarsäure, Maleinsäure, 2-Methylmaleinsäure, aber auch Halbester von ethylenisch ungesättigten Dicarbonsäuren, wie Maleinsäuremonoalkylester von $C_1$- bis $C_8$-Alkoholen sowie die Ammonium-, Natrium- oder Kaliumsalze der vorgenannten Säuren. Die Monomeren A1 umfassen aber auch die Anhydride entsprechender $\alpha,\beta$-monoethylenisch ungesättigter Dicarbonsäuren, wie beispielsweise Maleinsäureanhydrid oder 2-Methylmaleinsäureanhydrid. Bevorzugt ist das Monomer A1 ausgewählt aus der Gruppe umfassend Acrylsäure, Methacrylsäure, Crotonsäure, Fumarsäure, Maleinsäure, Maleinsäureanhydrid, 2-Methylmaleinsäure und Itaconsäure. Mit besonderem Vorteil werden erfindungsgemäß jedoch Acrylsäure und/oder Methacrylsäure als Monomere A1 eingesetzt.

Als Monomere B1 kommen alle ethylenisch ungesättigten Monomere in Betracht, welche sich von den Monomeren A1 unterscheiden und mit diesen copolymerisierbar sind. Als Monomere B1 beispielhaft genannt seien vinylaromatische Verbindungen, wie Styrol, $\alpha$-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome, bevorzugt 2 bis 12 C-Atome aufweisenden Monocarbonsäuren, wie Vinylacetat, Vinylpropionat, Vinyl-n-butyrat, Vinyllaurat und Vinylstearat, $C_1$- bis $C_{12}$-Alkylvinylether, wie Methylvinylether, Ethylvinylether, n-Propylvinylether, n-Butylvinylether, n-Pentylvinylether, n-Hexylvinylether, Ester aus vorzugsweise 3 bis 6 C-Atome aufweisenden $\alpha,\beta$-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl-, pentyl-, -hexyl-, -heptyl-, - octyl-, -nonyl-, -decyl- und -2-ethylhexylester, Fumar- und Maleinsäuredimethylester oder -di-n-butylester, Nitrile $\alpha,\beta$-monoethylenisch ungesättigter Carbonsäuren, wie Acrylnitril, Methacrylnitril, Fumarsäuredinitril, Maleinsäuredinitril sowie $C_{4-8}$-konjugierte Diene, wie 1 ,3-Butadien (Butadien) und Isopren in Betracht. Die vorgenannten Monomeren bilden in der Regel $\geq$ 80 Gew.-%, bevorzugt $\geq$ 90 Gew.-% und insbesondere bevorzugt $\geq$ 95 Gew.-% der Gesamtmenge aller Monomeren B1 und stellen somit die Hauptmonomeren B1 dar. Erfindungsgemäß bevorzugt enthält das Polymer 1 als Hauptmonomer B1 einen Ester der Acrylsäure oder Methacrylsäure mit einem $C_1$- bis $C_{12}$-Alkohol, insbesondere Methylacrylat, Ethylacrylat, n-Butylacrylat , 2-Ethylhexylacrylat oder Methylmethacrylat, eine vinylaromatische Verbindung, insbesondere Styrol oder $\alpha$-Methylstyrol,

ein Nitril einer α,β-monoethylenisch ungesättigten Carbonsäure, insbesondere Acrylnitril und/oder einen Vinylester einer $C_2$- bis $C_{12}$-Monocarbonsäure in einpolymerisierter Form.

Weiterhin kommen als Monomere B1 im untergeordnetem Maße solche ethylenisch ungesättigten Monomere in Betracht, die entweder wenigstens eine Sulfonsäuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien Acrylamid und Methacrylamid, ferner Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat. Die vorgenannten Monomere B1 werden in der Regel in Mengen ≤ 10 Gew.-%, bevorzugt ≤ 5 Gew.-% und insbesondere ≤ 1 Gew.-%, jeweils bezogen auf die Gesamtmenge an Monomeren B1, eingesetzt.

Weitere erfindungsgemäß einsetzbare Monomere B1 sind funktionalisierte ethylenisch ungesättigte Verbindungen, die ausgewählt sind aus der Gruppe umfassend Acetoacetoxyethylacrylat, Acetoacetoxypropylacrylat, Acetoacetoxybutylacrylat, Acetoacetoxyethylmethacrylat, Acetoacetoxypropylmethacrylat, Acetoacetoxybutylmethacrylat, Diacetonacrylamid und Diacetonmethacrylamid. Die vorgenannten Monomere B1 werden in der Regel in Mengen ≤ 15 Gew.-%, bevorzugt ≤ 8 Gew.-% und insbesondere ≤ 3 Gew.-%, jeweils bezogen auf die Gesamtmenge an Monomeren B1, eingesetzt.

Monomere B1, die üblicherweise die innere Festigkeit der Verfilmungen einer Polymermatrix erhöhen, weisen normalerweise wenigstens eine Epoxy-, wenigstens eine Carbonylgruppe oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die DiEster zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylat, 1,6-Hexandioldiacrylat und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat, 1,6-Hexandioldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. Die vorgenannten Monomere B1 werden in der Regel in Mengen ≤ 5 Gew.-%, bevorzugt ≤ 3 Gew.-% und insbesondere bevorzugt ≤ 1,5 Gew.-%, jeweils bezogen auf die Gesamtmenge an Monomeren B1, eingesetzt.

Als Monomer B1 bevorzugt werden jedoch Styrol, α-Methylstyrol, Methylmethacrylat, n-Butylacrylat und/oder 2-Ethylhexylacrylat eigesetzt.

Wesentlich für das Polymere 1 ist, dass es einen Hansch-Parameter > 1,35, vorteilhaft ≥ 1,40 und ≤ 2,00 und besonders vorteilhaft ≥ 1,50 und ≤ 1,90 aufweist.

Dabei sind die Hansch-Parameter generell ein Maß für die Hydrophobie von Monomeren M und den daraus gebildeten Polymeren P.

Die theoretischen Grundlagen der Berechnung der Hansch-Parameter stammen aus: Hansch, Fujita, J. Amer. Chem. Soc., 1964, 86, Seiten 1616-1626; H. Kubinyi, Methods and Principles of Medicinal Chemistry, Volume 1, R. Mannhold et al., Herausgeber VCH, Weinheim (1993); C. Hansch and A. Leo, Substituent Constants for Correlation Analysis, in Chemistry and Biology, Wiley, New York (1979); und C. Hansch, P. Maloney, T. Fujita, and R. Muir, Nature, 1962, 194, Seiten 178-180.

Die Hansch-Parameter für die Monomeren werden im Rahmen der vorliegenden Schrift generell mit der Software "KOWWIN v1.68" (September 2010) berechnet, die durch die US Enviromental Protection Agency (EPA) als "Estimation Programs Interface Suite™ for Microsoft® Windows, v4.11" [2012], United States Environmental Protection Agency, Washington, DC, USA, der Öffentlichkeit zur Verfügung gestellt ist. Nach diesem Programm wurden die Hansch-Parameter für die u.a. in dieser Schrift eingesetzten Monomeren A1 und A2 sowie Monomeren B1 und B2 ermittelt. Da die eingesetzten Polymeren 1 bzw. die verfahrensgemäß erhaltenen wässrigen Polymerdispersionen vorteilhaft einen pH-Wert im neutralen bis leicht alkalischen Bereich aufweisen, wurde für die säureguppenhaltigen Monomere eine vollständige Deprotonierung angenommen, so dass mit dem jeweils angegebenen Salz gerechnet wurde.

| Monomer | errechneter individueller Hansch-Parameter |
|---|---|
| Maleinsäure (als Dinatriummaleat) | -5,21 |
| Itakonsäure (als Dinatriumitakonat) | -5,60 |
| Vinylsulfonsäure (als Natriumvinylsulfonat) | -4,17 |
| Acrylsäure (als Ammoniumacrylat) | -2,43 |

(fortgesetzt)

| Monomer | errechneter individueller Hansch-Parameter |
|---|---|
| Methacrylsäure (als Ammoniummethacrylat) | -1,89 |
| Hydroxyethylacrylat | -0,25 |
| Hydroxyethylmethacrylat | 0,30 |
| Vinylacetat | 0,73 |
| Ethylacrylat | 1,22 |
| Methylacrylat | 0,73 |
| Ureidomethacrylat | 0,41 |
| Acetoacetoxyethylmethacrylat | 0,24 |
| Styrol | 2,89 |
| α-Methylstyrol | 3,44 |
| Methylmethacrylat | 1,28 |
| n-Butylacrylat | 2,20 |
| iso-Butylacrylat | 2,13 |
| iso-Butylmethacrylat | 2,67 |
| Hexandioldiacrylat | 3,08 |
| 2-Ethylhexylacrylat | 4,09 |
| 2-Ethylhexylmethacrylat | 4,64 |
| Butylmethacrylat | 2,75 |
| Iso-Bornylmethacrylat | 4,76 |
| Laurylacrylat | 6,13 |
| Laurylmethacrylat | 6,68 |
| Stearylacrylat | 9,62 |
| Tetraethylenglycoldiacrylat | 0,29 |
| Acrylnitril | 0,21 |
| Allylmethacrylat | 2,12 |
| Butandioldiacrylat | 2,10 |
| Vinyltrimethoxysilane | -0,31 |
| Vinyltriethoxysilan | 1,16 |
| 3-Methacryloxypropyltrimethoxysilan | 0,75 |

Die Berechnung der Hansch-Parameter für die aus den Monomeren M gebildeten Polymeren P erfolgt generell nach folgender allgemeiner Formel:

$$HP_P = x_1 \bullet HP_{M1} + x_2 \bullet HP_{M2} + .... x_n \bullet HP_{Mn},$$

mit

| | |
|---|---|
| $HP_P$: | errechneter Hansch-Parameter des aus den Monomeren M1, M2 ... Mn gebildeten Polymeren P |
| $X_1$, $X_2$, $X_n$: | Gewichtsanteile der im Polymeren P einpolymerisierten Monomeren M1, M2 .... Mn in Prozent dividiert durch 100, wobei die Summe aus $x_1 + x_2 + ..... x_n = 1$ ergibt, |
| $HP_{M1}$, $HP_{M2}$, $HP_{Mn}$: | die jeweils für die Monomeren M1, M2 .... Mn errechneten individuellen Hansch-Parameter |

Der Hansch-Parameter für ein Polymer, welches beispielsweise aus 15 Gew.-% an Acrylsäure-Ammoniumsalz und 85 Gew.-% an Styrol aufgebaut ist, errechnet sich daher wie folgt:

$$HP_P = x_{Acrylsäuresalz} \bullet HP_{Acrylsäuresalz} + x_{Styrol} \bullet HP_{Styrol}$$

$$HP_P = 0,15 \bullet -2,43 + 0,85 \bullet 2,89$$

$$HP_P = 2,09$$

Mit Vorteil enthält das wenigstens eine Polymere 1 daher Acrylsäure und/oder Methacrylsäure als Monomere A1 und Styrol, α-Methylstyrol, Methylmethacrylat, n-Butylacrylat und/oder 2-Ethylhexylacrylat als Monomere B1 in einpolymerisierter Form.

Erfindungsgemäß vorteilhaft enthält das wenigstens eine Polymere 1 dementsprechend

| | |
|---|---|
| ≥ 4,0 und ≤ 25 Gew.-% | wenigstens eines Monomeren A1, bevorzugt Acrylsäure und/oder Methacrylsäure, und |
| ≥ 75 und ≤ 96,0 Gew.-% | wenigstens eines Monomeren B1, bevorzugt Styrol, α-Methylstyrol, Methylmethacrylat, n-Butylacrylat und/oder 2-Ethylhexylacrylat |

und besonders vorteilhaft

| | |
|---|---|
| ≥ 6 und ≤ 20 Gew.-% | wenigstens eines Monomeren A1, bevorzugt Acrylsäure und/oder Methacrylsäure, und |
| ≥ 80 und ≤ 94 Gew.-% | wenigstens eines Monomeren B1, bevorzugt Styrol, α-Methylstyrol, Methylmethacrylat, n-Butylacrylat und/oder 2-Ethylhexylacrylat |

in einpolymerisierter Form.

Die Herstellung des wenigstens einen Polymeren 1 ist dem Fachmann prinzipiell bekannt und erfolgt nach geläufigen radikalisch oder ionisch initiierten Masse-, Lösungs- oder Emulsionspolymerisationsverfahren. Geeignete Herstellverfahren sind daher beispielsweise in der EP-A 1333074 in Abschnitt [0016], in den Beispielen der EP-A 574803 [Copolymerisat A], der DE-A 3225876, sowie US-A 4013607, US-A 4414770, US-A 4529787, US-A 4546160 oder EP-A 1732962 offenbart. Das wenigstens eine Polymere 1 kann daher in Form seiner Substanz (Masse), in einem geeigneten Lösungsmittel gelöst oder in einem geeigneten flüssigen Medium dispergiert vorliegen. Besonders bevorzugt wird das wenigstens eine Polymere 1 in Form eines Pulvers oder Granulates und besonders bevorzugt in Form einer wässrigen Polymerlösung eingesetzt, wobei die entsprechenden Carbonsäuregruppen jeweils durch eine Base wie Natriumhydroxid oder Kaliumhydroxid und insbesondere bevorzugt Ammoniumhydroxid neutralisiert wurden. Erfindungsgemäß kann es auch von Vorteil sein, das wenigstens eine Polymere 1 als erste Stufe einer zweitstufigen radikalisch initiierten wässrigen Emulsionspolymerisation herzustellen, wobei die zweite Stufe der Herstellung des Polymeren 2 entspricht.

Erfindungsgemäß weist das wenigstens eine Polymere 1 eine Glasübergangstemperatur im Bereich ≥ 40 und ≤ 150 °C, vorteilhaft im Bereich ≥ 60 und ≤ 140 °C und besonders vorteilhaft im Bereich ≥ 70 und ≤ 130 °C auf.

Im Rahmen dieser Schrift wird die Glasübergangstemperatur generell nach DIN EN ISO 11357-2 (2013-09) [Differentialthermoanalyse, midpoint temperature, Aufheizrate 20 K/min] bestimmt.

Dabei ist dem Fachmann geläufig, dass nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) die Glasübergangstemperatur von höchstens schwach vernetzten Mischpolymerisaten unter Verwendung folgender Formel

$$1/Tg = x_1/Tg^1 + x_2/Tg^2 + .... x_n/Tg^n,$$

in guter Annäherung abgeschätzt werden kann, wobei $x_1$, $x_2$, .... $x_n$ die Massenbrüche der Monomeren 1, 2, .... n und $Tg^1$, $Tg^2$, .... $Tg^n$ die Glasübergangstemperaturen der jeweils nur aus einem der Monomeren 1, 2, .... n aufgebauten Polymerisaten in Grad Kelvin bedeuten. Die Glasübergangstemperaturen dieser Homopolymerisate der meisten ethylenisch ungesättigten Monomere sind bekannt (bzw. können in einfacher an sich bekannter Weise experimentell ermittelt werden) und beispielsweise in J. Brandrup, E.H. Immergut, Polymer Handbook 1st Ed. J. Wiley, New York, 1966, 2nd Ed. J. Wiley, New York, 1975 und 3rd Ed. J. Wiley, New York, 1989, sowie in Ullmann's Cncyclopedia of Industrial Chemistry, Seite 169, Verlag Chemie, Weinheim, 1992, aufgeführt.

In einer erfindungsgemäßen Ausführungsform wird das wenigstens eine Polymere 1 in partikulärer Form mit einer gewichtsmittleren Teilchengröße im Bereich von ≥ 10 und ≤ 200 nm eingesetzt.

Die Bestimmung der gewichtsmittleren Teilchendurchmesser erfolgt in dieser Schrift generell nach ISO 13321 mit einem High Performance Particle Sizer der Fa. Malvern bei 22 °C und einer Wellenlänge von 633 nm.

In einer erfindungsgemäß bevorzugten Ausführungsform wird jedoch das wenigstens eine Polymere 1 in Form einer wässrigen Polymerlösung eingesetzt. Um die Löslichkeit des wenigstens einen Polymeren 1 zu erhöhen bzw. überhaupt zu gewährleisten werden dessen Säuregruppen wenigstens teilweise und bevorzugt vollständig mit einer Base neutralisiert, wobei als bevorzugte Basen Natriumhydroxid, Kaliumhydroxid oder Ammoniumhydroxid und insbesondere bevorzugt Ammoniumhydroxid eingesetzt werden. Die Herstellung der Polymerlösung erfolgt vorteilhaft dergestalt, dass zuerst das wenigstens eine Polymere 1 pulverförmig in eine wässrige Vorlage eingerührt wird und dann eine wässrige Basen-Lösung, insbesondere von Natriumhydroxid, Kaliumhydroxid oder Ammoniumhydroxid portionsweise unter Rühren und ggf. Erwärmen zugegeben wird. Dabei wird die Menge an Base, insbesondere Natriumhydroxid, Kaliumhydroxid oder Ammoniumhydroxid sowie des wenigstens einen Polymeren 1 so gewählt, dass das wenigstens eine Polymere 1 vollständig gelöst wird und dabei der pH-Wert der wässrigen Polymer 1-Lösung im Bereich von ≥ 5,0 und ≤ 9,0, bevorzugt ≥ 6,5 und ≤ 8,5 und besonders bevorzugt ≥ 7,0 und ≤ 8,0 liegt.

In einer bevorzugten Ausführungsform liegt das gewichtsmittlere Molekulargewicht Mw des erfindungsgemäß eingesetzten wenigstens einen Polymeren 1 im Bereich von ≥ 1000 und ≤ 50000 g/mol, vorteilhaft ≥ 3000 und ≤ 25000 g/mol, insbesondere vorteilhaft ≥ 5000 und ≤ 15000 g/mol und mit besonderem Vorteil ≥ 7000 und ≤ 10000 g/mol.

Das gewichtsmittlere Molekulargewicht Mw wird in dieser Schrift, wenn nicht anders angegeben, generell über eine Größenausschlusschromatographie (size exclusion chromatography, SEC) unter Verwendung von Tetrahydrofuran als Eluent und von internen Polymer-Standards bestimmt. Die Methode und ihre Durchführung sind dem Fachmann geläufig. Vorteilhaft erfolgt die Bestimmung des gewichtsmittleren Molekulargewichte mit Tetrahydrofuran, enthaltend 0,1 Gew.-% Trifluoressigsäure, als Eluent bei einer Durchflussgeschwindigkeit von 1 ml/min und 35 °C Säulentemperatur. Dabei werden die wässrigen Polymerdispersionen im Eluenten vorteilhaft auf eine Konzentration von ca. 2 mg Polymer pro ml verdünnt, diese Lösung über ein 0,2 μm Filter (Sartorius Minisart SRP 25) zur Entfernung eines etwaigen unlöslichen Gelanteils filtriert und von der erhaltenen filtrierten Lösung 100 μl von dieser Lösung injiziert. Als Säulen werden drei Säulen mit einem inneren Durchmesser von 7,5 mm wie folgt kombiniert: 5 cm Vorsäule (Plgel 10μ Guard Vorsäule) gefolgt von zwei in Reihe geschalteten 30 cm Trennsäulen (jeweils Plgel 10μ Mixed B). Die Detektion erfolgt vorteilhaft mittels eines Differentialrefraktometers Agilent 1100, UV-Photometer Agilent 1100 VWD, PSS SLD7000-BI-MwA (UV/254 nm/Agilent). Die Kalibrierung ist dem Fachmann geläufig und erfolgt mit eng verteiltem Polystyrol-Standards, beispielsweise der Fa. Polymer Laboratories mit Molekulargewichten von Mw = 580 bis Mw = 7500000, sowie Hexylbenzol (M = 162).

Erfindungsgemäß werden

| | |
|---|---|
| ≤ 5,0 Gew.-% | wenigstens einer α,β-monoethylenisch ungesättigten $C_3$- bis $C_6$-Mono- oder Dicarbonsäure (Monomere A2), |
| ≥ 95 und ≤ 100 Gew.-% | wenigstens einer ethylenisch ungesättigten Verbindung, welche sich von den Monomeren A2 unterscheidet (Monomere B2), |

in einem wässrigen Medium in Gegenwart des wenigstens eines Polymeren 1 nach der Methode einer radikalisch initiierte wässrige Emulsionspolymerisation radikalisch polymerisiert, wobei sich die Mengen der Monomeren A2 und B2 auf 100 Gew.-% aufsummieren und wobei die Art und Mengen der Monomeren A2 und B2 so gewählt werden, dass das daraus erhaltene Polymere 2 einen Hansch-Parameter ≥ 2,80 und eine Glasübergangstemperatur ≥ 20 °C aufweist.

Die Durchführung von radikalisch initiierten Emulsionspolymerisationen von ethylenisch ungesättigten Verbindungen (Monomere) in einem wässrigen Medium ist vielfach vorbeschrieben und dem Fachmann daher hinreichend bekannt [vgl. hierzu Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)]. Die radikalisch initiierte wässrige Emulsionspolymerisation erfolgt üblicherweise dergestalt, dass man die Monomere, in der Regel unter Mitverwendung von Dispergierhilfsmitteln, wie Emulgatoren und/oder Schutzkolloiden, in wässrigem Medium dispers verteilt und mittels wenigstens eines wasserlöslichen radikalischen Polymerisationsinitiators polymerisiert. Häufig werden bei den erhaltenen wässrigen Polymerisatdispersionen die Restgehalte an nicht umgesetzten Monomeren durch dem Fachmann ebenfalls bekannte chemische und/oder physikalische Methoden [siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und 19847115] herabgesetzt, der Polymerisatfeststoffgehalt durch Verdünnung oder Aufkonzentration auf einen gewünschten Wert eingestellt oder der wässrigen Polymerisatdispersion weitere übliche Zusatzstoffe, wie beispielsweise schaum- oder viskositätsmodifizierende Additive zugesetzt. Von dieser allgemeinen Verfahrensweise unterscheidet sich das erfindungsgemäße Verfahren lediglich dadurch, dass die Polymerisationsreaktion in Anwesenheit des wenigstens einen Polymeren 1 erfolgt, wobei die Monomeren A2 und B2 in Art und Menge so gewählt werden, dass das daraus erhaltene Polymere 2 einen Hansch-Parameter ≥ 2,80 und eine Glasübergangstemperatur ≥ 20 °C aufweist.

Dabei entsprechen die Monomeren A2 den Monomeren A1 und die Monomeren B2 den Monomeren B1 (wie voran beschrieben), wobei jedoch die Art und Menge dieser Monomeren so gewählt werden, dass das daraus erhaltene Polymere 2 einen Hansch-Parameter ≥ 2,80 und eine Glasübergangstemperatur ≥ 20 °C aufweist.

Als Monomeren A2 werden bevorzugt Acrylsäure und/oder Methacrylsäure und als Monomere B2 bevorzugt Styrol, α-Methylstyrol, Methylmethacrylat, n-Butylacrylat und/oder 2-Ethylhexylacrylat eingesetzt.

Bei der Herstellung der Polymeren 2 beträgt die Gesamtmenge an Monomeren A2 erfindungsgemäß ≤ 5 Gew.-%, bevorzugt ≤ 2 Gew.-% und insbesondere bevorzugt 0 Gew.-% und die Gesamtmenge der Monomeren B2 demgemäß ≥ 95 Gew.-%, bevorzugt ≥ 98 Gew.-% und insbesondere bevorzugt 100 Gew.-%.

Erfindungsgemäß werden die Monomeren A2 und B2 in Art und Menge so gewählt, dass das daraus erhaltene Polymere 2 einen Hansch-Parameter ≥ 2,80, vorteilhaft ≥ 2,80 und ≤ 3,20 und insbesondere vorteilhaft ≥ 2,90 und ≤ 3,10 aufweist. Die Berechnung der Hansch-Parameter für die Polymeren 2 erfolgt wie bei den Polymeren 1 beschrieben.

Erfindungswesentlich ist, dass erhaltene Polymere 2 eine Glasübergangstemperatur ≥ 20 °C, vorteilhaft ≥ 20 und ≤ 60 °C und insbesondere vorteilhaft ≥ 25 und ≤ 45 °C aufweist.

Erfindungsgemäß von Bedeutung ist es, dass die vorgenannten Monomeren A2 und B2 einzeln oder auch als Gemische eingesetzt werden. Von den Monomeren A2 und B2 können jeweils die Gesamt- bzw. Teilmengen im wässrigen Polymerisationsmedium vor Initiierung der Polymerisationsreaktion vorgelegt und die gegebenenfalls verbliebenen Teilmengen unter Polymerisationsbedingungen zudosiert werden. Erfindungsgemäß vorteilhaft werden jedoch die Gesamtmengen der Monomeren A2 und B2 dem wässrigen Polymerisationsmedium unter Polymerisationsbedingungen zuzudosiert. Dabei können die Monomeren A2 und B2 dem wässrigen Polymerisationsmedium jeweils in Einzelströmen, als Monomerengemisch oder in Form einer wässrigen Monomerenemulsion diskontinuierlich, sowie kontinuierlich mit gleichbleibenden oder sich ändernden Mengenströmen zudosiert werden. Mit besonderem Vorteil werden die Monomeren A2 und B2 dem wässrigen Polymerisationsmedium als Monomerengemisch kontinuierlich mit gleichbleibenden Mengenstrom zudosiert.

Erfindungsgemäß liegt das Gewichtsverhältnis des wenigstens einen Polymeren 1 zur Summe der Gesamtmengen an Monomeren A2 und B2 (Gesamtmonomerenmenge 2) im Bereich von 15:85 bis 60:40, vorteilhaft von 20:80 bis 50:50 und insbesondere vorteilhaft von 25:75 bis 40:60.

Die radikalisch initiierte wässrige Emulsionspolymerisation zur Herstellung der Polymere 2 wird in der Regel in Gegenwart eines radikalischen Polymerisationsinitiators (Radikalinitiator) durchgeführt. Als Radikalinitiatoren kommen alle diejenigen in Betracht, die in der Lage sind, eine radikalische wässrige Emulsionspolymerisation zu initiieren. Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Mentyl- oder Cumylhydroperoxid, sowie Dialkyl- oder Diarylperoxide, wie Di-tert.-Butyl- oder Di-Cumylperoxid eingesetzt werden. Als Azoverbindung finden im Wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Selbstverständlich können auch sogenannte Redoxinitiatorensysteme als Radikalinitiatoren eingesetzt werden. Als Oxidationsmittel für Redoxinitiatorsysteme kommen im Wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden.

Unter Initiierung der Polymerisationsreaktion wird der Start der Polymerisationsreaktion der im Polymerisationsgefäß vorliegenden Monomeren nach Radikalbildung des Radikalinitiators verstanden. Dabei kann die Initiierung der Polymerisationsreaktion durch Zugabe von Radikalinitiator zum wässrigen Polymerisationsgemisch im Polymerisationsgefäß unter Polymerisationsbedingungen erfolgen. Es ist aber auch möglich, dass eine Teil- oder die Gesamtmenge des Radikalinitiators dem die vorgelegten Monomeren enthaltenden wässrigen Polymerisationsgemisch im Polymerisationsgefäß unter Bedingungen, welche nicht geeignet sind eine Polymerisationsreaktion auszulösen, beispielsweise bei tiefer Temperatur, zugegeben werden und danach im wässrigen Polymerisationsgemisch Polymerisationsbedingungen eingestellt werden. Unter Polymerisationsbedingungen sind dabei generell diejenigen Temperaturen und Drücke zu verstehen, unter denen die radikalisch initiierte wässrige Emulsionspolymerisation mit ausreichender Polymerisationsgeschwindigkeit verläuft. Sie sind insbesondere abhängig vom verwendeten Radikalinitiator. Vorteilhaft werden Art und Menge des Radikalinitiators, die Polymerisationstemperatur und der Polymerisationsdruck so ausgewählt, dass der Radikalinitiator eine Halbwertszeit < 3 Stunden und insbesondere vorteilhaft < 1 Stunde aufweist und dabei immer genügend Startradikale zur Verfügung stehen, um die Polymerisationsreaktion zu initiieren und aufrechtzuerhalten.

Als Reaktionstemperatur für die radikalisch initiierte wässrige Emulsionspolymerisation kommt der gesamte Bereich von 0 bis 170 °C in Betracht. Dabei werden in der Regel Temperaturen von 50 bis 120 °C, bevorzugt 60 bis 110 °C und insbesondere bevorzugt 60 bis 100 °C angewendet. Die radikalisch initiierte wässrige Emulsionspolymerisation kann bei einem Druck kleiner, gleich oder größer 1 atm [1,013 bar (absolut), Atmosphärendruck] durchgeführt werden, so dass die Polymerisationstemperatur 100 °C übersteigen und bis zu 170 °C betragen kann. Bei Anwesenheit von Monomeren A1 bis B3 mit einem niedrigen Siedepunkt wird die Emulsionspolymerisation vorzugsweise unter erhöhtem Druck durchgeführt. Dabei kann der Druck 1,2, 1,5, 2, 5, 10, 15 bar (absolut) oder noch höhere Werte einnehmen. Wird die Emulsionspolymerisation im Unterdruck durchgeführt, werden Drücke von 950 mbar, häufig von 900 mbar und oft 850 mbar (absolut) eingestellt. Vorteilhaft wird die radikalische wässrige Emulsionspolymerisation bei 1 atm unter Sauerstoffausschluss, insbesondere unter Inertgasatmosphäre, wie beispielsweise unter Stickstoff oder Argon durchgeführt.

Erfindungsgemäß kann die Gesamtmenge des Radikalinitiators im wässrigen Reaktionsmedium vor Initiierung der Polymerisationsreaktion vorgelegt werden. Es ist aber auch möglich, gegebenenfalls lediglich eine Teilmenge des Radikalinitiators im wässrigen Reaktionsmedium vor Initiierung der Polymerisationsreaktion vorzulegen und dann unter Polymerisationsbedingungen während der radikalisch initiierten Emulsionspolymerisation die Gesamtmenge bzw. die gegebenenfalls verbliebene Restmenge in der ersten und/oder zweiten Polymerisationsstufe nach Maßgabe des Verbrauchs kontinuierlich oder diskontinuierlich zuzugeben.

In der Regel beträgt die Gesamtmenge an Radikalinitiatoren ≥ 0,05 und ≤ 5 Gew.-%, bevorzugt ≥ 0,1 und ≤ 3 Gew.-% und besonders bevorzugt ≥ 0,1 und ≤ 1,5 Gew.-%, jeweils bezogen auf die Gesamtmonomerenmenge 2.

Zur Einstellung der gewichtsmittleren Molekulargewichte der gebildeten Polymere 2 können radikalkettenübertragende Verbindungen (Radikalkettenregler) eingesetzt werden. Dabei kommen im Wesentlichen aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, Mercaptoalkansäure und deren Derivate, wie 3-Mercaptopropionsäure-6-methylheptylester oder 2-Mercaptoethansäure-2-ethylhexylester sowie alle weiteren im Polymerhandbook 3rd edtition, 1989, J. Brandrup und E.H. Immergut, John Weley & Sons, Abschnitt II, Seiten 133 bis 141, beschriebenen Schwefelverbindungen, aber auch aliphatische und/oder aromatische Aldehyde, wie Acetaldeyhd, Propionaldehyd und/oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren Wasserstoffatomen, wie beispielsweise Toluol, zum Einsatz. Es ist aber auch möglich, Gemische sich nicht störender vorgenannter Radikalkettenregler einzusetzen.

Erfindungsgemäß kann die Gesamtmenge des Radikalkettenreglers im wässrigen Reaktionsmedium vor Initiierung der Polymerisationsreaktion vorgelegt werden. Es ist aber auch möglich, gegebenenfalls lediglich eine Teilmenge des Radikalkettenreglers im wässrigen Reaktionsmedium vor Initiierung der Polymerisationsreaktion vorzulegen und dann unter Polymerisationsbedingungen während der radikalisch initiierten Emulsionspolymerisation die Gesamtmenge bzw. die gegebenenfalls verbliebene Restmenge in der ersten und/oder zweiten Polymerisationsstufe nach Bedarf kontinuierlich oder diskontinuierlich zuzugeben. Selbstverständlich können in der ersten und in der zweiten Polymerisationsstufe unterschiedliche Radikalkettenregler in unterschiedlichen Mengen eingesetzt werden.

In der Regel beträgt die Gesamtmenge an Radikalkettenregler ≥ 0 und ≤ 5 Gew.-%, bevorzugt ≥ 0 und ≤ 2 Gew.-% und besonders bevorzugt ≥ 0 und ≤ 1 Gew.-%, jeweils bezogen auf die Gesamtmonomerenmenge 2.

Erfindungsgemäß vorteilhaft, werden solche Polymeren 1 in Art und Menge eingesetzt, welche im wässrigen Medium unter Polymerisationsbedingungen gelöst sind. Dies sind in der Regel solche Polymeren 1, deren Carbonsäuregruppen wenigstens teil- und bevorzugt vollneutralisiert sind. Ist dies der Fall, so wirken diese Polymeren 1 bei ausreichender Menge als Dispergierhilfsmittel welche in der Lage sind, sowohl die Monomerentröpfchen als auch die während der Emulsionspolymerisation gebildeten Polymerteilchen im wässrigen Medium dispers verteilt zu halten und so die Stabilität der erzeugten wässrigen Polymerdispersion zu gewährleisten.

Reicht jedoch die Dispergiermittelwirkung der eingesetzten Polymere 1 nicht aus um die Monomerentröpfchen wie auch die gebildeten Polymerteilchen im wässrigen Medium dispers verteilt zu halten so werden erfindungsgemäß zusätzliche Dispergierhilfsmittel eingesetzt. Als solche kommen sowohl die zur Durchführung von radikalischen wässrigen Emulsionspolymerisationen üblicherweise eingesetzten Schutzkolloide wie auch Emulgatoren in Betracht.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Seiten 411 bis 420, Georg-Thieme-Verlag, Stuttgart, 1961. Selbstverständlich können auch Gemische aus Emulgatoren und/oder Schutzkolloiden verwendet werden. Vorzugsweise werden als Dispergierhilfsmittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im Allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind. Gebräuchliche Emulgatoren sind z.B. ethoxilierte Mono-, Di- und Tri-Alkylphenole (EO-Grad: 3 bis 50, Alkylrest: C4 bis C12), ethoxilierte Fettalkohole (EO-Grad: 3 bis 50; Alkylrest: C8 bis C36) sowie Alkalimetall- und Ammoniumsalze von Alkylsulfaten (Alkylrest: C8 bis C12), von Schwefelsäurehalbestern ethoxylierter Alkanole (EO-Grad: 4 bis 30, Alkylrest: C12 bis C18) und ethoxilierter Alkylphenole (EO-Grad: 3 bis 50, Alkylrest: C4 bis C12), von Alkylsulfonsäuren (Alkylrest: C12 bis C18) und von Alkylarylsulfonsäuren (Alkylrest: C9 bis C18). Weitere geeignete Emulgatoren finden sich in Houben-Weyl, Methoden der organischen Chemie, Band XIV/1, Makromolekulare Stoffe, Seiten 192 bis 208, Georg-Thieme-Verlag, Stuttgart, 1961.

Als grenzflächenaktive Substanzen haben sich ferner Verbindungen der allgemeinen Formel I

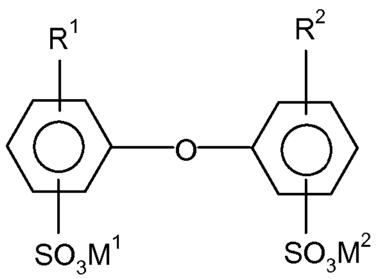

(I) ,

worin $R^1$ und $R^2$ H-Atome oder $C_4$- bis $C_{24}$-Alkyl bedeuten und nicht gleichzeitig H-Atome sind, und $M^1$ und $M^2$ Alkalimetallionen und/oder Ammoniumionen sein können, als geeignet erwiesen. In der allgemeinen Formel I bedeuten $R^1$ und $R^2$ bevorzugt lineare oder verzweigte Alkylreste mit 6 bis 18 C-Atomen, insbesondere mit 6, 12 und 16 C-Atomen oder Wasserstoff, wobei $R^1$ und $R^2$ nicht beide gleichzeitig H-Atome sind. $M^1$ und $M^2$ sind bevorzugt Natrium, Kalium oder Ammonium, wobei Natrium besonders bevorzugt ist. Besonders vorteilhaft sind Verbindungen der allgemeinen Formel I, in denen $M^1$ und $M^2$ Natrium, $R^1$ ein verzweigter Alkylrest mit 12 C-Atomen und $R^2$ ein H-Atom oder $R^1$ ist. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Die Verbindungen der allgemeinen Formel III sind allgemein bekannt, z.B. aus US-A 4269749, und im Handel erhältlich.

Werden erfindungsgemäß Dispergierhilfsmittel eingesetzt, so finden vorteilhaft anionische und/oder nichtionische und insbesondere vorteilhaft anionische Tenside Verwendung.

In der Regel beträgt die Gesamtmenge an optional zusätzlichen Dispergierhilfsmitteln ≥ 0,05 und ≤ 3 Gew.-%, bevorzugt ≥ 0,1 und ≤ 2 Gew.-% und besonders bevorzugt ≥ 0,5 und ≤ 1,5 Gew.-%, jeweils bezogen auf die Gesamtmonomerenmenge 2.

Mit besonderem Vorteil werden erfindungsgemäß jedoch keine zusätzlichen Dispergierhilfsmittel eingesetzt.

Die nach der Polymerisation erhaltene wässrige Polymerdispersion enthält Polymerteilchen, deren gewichtsmittlerer Teilchendurchmesser im Bereich ≥ 10 und ≤ 800 nm, vorteilhaft im Bereich ≥ 20 und ≤ 400 nm und insbesondere im Bereich ≥ 30 und ≤ 100 nm, liegen.

Erfindungsgemäß lassen sich die erhaltenen wässrigen Polymerdispersionen trocknen, wodurch Polymerpulver zugänglich werden. Entsprechende Trocknungsverfahren, wie beispielsweise Gefriertrocknung oder Sprühtrocknung, sind dem Fachmann geläufig

Selbstverständlich sind in einer bevorzugten Ausführungsform auch die nach dem erfindungsgemäßen Verfahren zugänglichen wässrigen Polymerdispersionen sowie die durch deren Trocknung zugänglichen Polymerpulver umfasst.

Von Bedeutung ist ferner, dass sich die nach dem erfindungsgemäßen Verfahren zugänglichen wässrigen Polymerdispersionen sowie die durch deren Trocknung zugänglichen Polymerpulver vorteilhaft zur Verwendung als Bindemittel bei der Herstellung von Klebstoffen, Dichtmassen, Kunstharzputzen, Papierstreichmassen, Faservliesen, flexiblen Dachbeschichtungen und Anstrichmitteln sowie bei der Sandverfestigung, als Komponente bei der Herstellung von Textil- oder Lederhilfsmitteln und Schlagzähmodifier oder zur Modifizierung von mineralischen Bindemitteln und Kunststoffen eignen.

Erfindungsgemäß vorteilhaft werden die erfindungsgemäßen wässrigen Polymerdispersionen sowie die erfindungsgemäßen Polymerpulver zur Herstellung von wässrigen Formulierungen wie insbesondere Beschichtungs- bzw. Anstrichmittel eingesetzt, welche vorteilhaft zum Beschichten von Holz, Holzfunier, Holzfaserplatten oder Korkoberflächen, Papier, Pappe, Karton, Textil, Leder, Vlies, Kunststoffoberflächen (wie beispielsweise Polyamid, Acrylnitril-Butadien-Styrol-Copolymere, Polycarbonat, Acrylnitril-Butadien-Styrol-Copolymere/Polycarbonat-Mischungen, Polypropylen, Mischungen aus Polypropylen und Ethylen-Propylen-Butadien-Copolymere, Polystyrol oder Polyvinylchlorid), Glas, Keramik, mineralischen Baustoffen, Metallen und beschichteten Metallen geeignet sind.

Die erfindungsgemäß zugänglichen wässrigen Polymerdispersionen sowie die daraus erhältlichen Polymerpulver werden vorteilhaft als Bindemittel in wässrigen Formulierungen eingesetzt, welche noch wenigstens ein Pigment enthalten. Erfindungsgemäß sind daher auch pigmenthaltige wässrige Formulierungen, wie insbesondere wasserbasierte Beschichtungs- bzw. Anstrichmittel umfasst, welche wenigstens eine erfindungsgemäße wässrige Polymerdispersionen und/oder wenigstens ein daraus erhältliches Polymerpulver als Bindemittel enthalten.

Als Pigmente können prinzipiell alle dem Fachmann geläufigen Weiß- bzw. Buntpigmente eingesetzt werden. Dabei werden unter Pigmenten gemäß CD Römpp Chemie Lexikon - Version 1.0, Stuttgart/New York: Georg Thieme Verlag 1995 unter Verweis auf DIN 55943, partikelförmige im Anwendungsmedium praktisch unlösliche, anorganische oder organische, bunte oder unbunte Farbmittel verstanden.

Als wichtigstes Weißpigment ist aufgrund seines hohen Brechungsindex (Rutil: 2,70 und Anatas: 2,55) und seines guten Deckvermögens Titandioxid in seinen verschiedenen Modifikationen zu nennen. Aber auch Zinkoxid und Zinksulfid werden als Weißpigmente eingesetzt. Dabei können diese Weißpigmente in oberflächenbeschichteter (d.h. gecoateter) bzw. unbeschichteter (d.h. nicht gecoateter) Form eingesetzt werden. Daneben werden aber auch organische Weißpigmente, wie beispielsweise nichtverfilmende styrol- und carboxylgruppenreiche hohle Polymerteilchen mit einer Teilchengröße von ca. 300 bis 400 nm (sogenannte Opakteilchen) verwendet.

Neben Weißpigmenten können zur Farbgestaltung dem Fachmann geläufige unterschiedlichste Buntpigmente, beispielsweise die etwas preiswerteren anorganischen Eisen-, Cadmium-, Chrom- und Bleioxide bzw. -sulfide, Bleimolybdat, Kobaltblau oder Ruß sowie die etwas teureren organischen Pigmente, beispielsweise Phthalocyanine, Azopigmente, Chinacridone, Perylene oder Carbazole eingesetzt werden. Erfindungsgemäß bevorzugt wird jedoch Titandioxid, insbesondere in seiner Rutil-Form, als wenigstens ein Pigment eingesetzt.

Selbstverständlich können die wässrigen Formulierungen, insbesondere die Beschichtungs- bzw. Anstrichmittel im Rahmen der vorliegenden Erfindung je nach Anwendungszweck noch weitere, dem Fachmann in Art und Menge geläufige übliche Hilfsstoffe enthalten, wie beispielsweise, Füllstoffe, lösliche Farbstoffe, optische Aufheller, Retentionsmittel, Netzmittel, Filmbildehilfsmittel, Entschäumer, Konservierungsmittel, Biozide, Schleimbekämpfungsmittel, Weichmacher, Antiblockmittel, Antistatika, Puffersubstanzen, Hydrophobierungsmittel etc.

Als Füllstoffe werden im Wesentlichen anorganische Materialien mit im Vergleich zu den Pigmenten geringerem Brechungsindex verwendet (weiße Füllstoffe weisen nach DIN 55943 und DIN 55945 Brechungsindexwerte $< 1,7$ auf). Die pulverförmigen Füllstoffe sind dabei häufig natürlich vorkommende Mineralien, wie beispielsweise Calcit, Kreide, Dolomit, Kaolin, Talk, Glimmer, Diatomeenerde, Baryt, Quarz oder Talk/Chlorit-Verwachsungen aber auch synthetisch hergestellte anorganische Verbindungen, wie beispielsweise präzipitiertes Calciumcarbonat, kalziniertes Kaolin oder Bariumsulfat sowie pyrogene Kieselsäure. Bevorzugt wird als Füllstoff Calciumcarbonat in Form des kristallinen Calcits oder der amorphen Kreide eingesetzt.

Optional können die wässrigen Formulierungen noch mindestens ein organisches Lösungsmittel enthalten, das bevorzugt als Filmbildehilfsmittel wirkt. Dafür kommen beispielsweise aromatische Kohlenwasserstoffe, wie Solventnaphtha, Benzol, Toluol, Xylol, oder Gemische von aromatischen Kohlenwasserstoffen, wie sie beispielsweise als Solvesso® 100, 150 oder 200 vertrieben werden, Chlorbenzol, Ester wie Ethylacetat, Butylacetat, Methylglykolacetat, Ethylglykolacetat, Methoxypropylacetat, 2,2,4-Trimethyl-1,3-pentandiol-monoisobutyrat (Texanol® der Firma Eastman), Dipropylenglykolmonomethyletheracetat, Propylenglykolmonoethyletheracetat, Propylenglykolmonomethyletheracetat, Ether wie Butylglykol, Tetrahydrofuran, Dioxan, Ethylglykolether, Diethylenglykolmonoethylether, Diethylenglykolmonomethylether, Diethylenglykol mono-n-butylether, Diethylenglykolmono-n-hexylether, Diethylenglykoldiethylether, Diethylenglykoldimethylether, Diethylenglykoldi-n-butylether, Diethylenglykoldi-n-hexylether, Ethylenglykol-di-2-ethylhexylether, Ethylenglykoldi-n-butylether, Ethylenglykoldi-n-hexylether, Ethylenglykol-di-n-propylether, Dipropylenglykoldimethylether, Dipropylenglykolmonomethylether, Dipropylenglykolmono-n-butylether, Dipropylenglykolmono-n-propylether, Dipropylenglykolmono-tert-butylether, Dipropylenglykol-di-tert-butylether, Propylenglykolmonoethylether, Propylenglykolmonomethylether, Propylenglykolmono-n-propylether, Propylenglykolmonophenylether, Propylenglykolmono-tert-butylether, Propylenglykoldiphenylether, Propylenglykolmono-n-butylether, Tripropylenglykolmonomethylether und Poly(allylglycidylether), Ketone wie Aceton, Methylethylketon, halogenhaltige organische Lösemittel wie Methylenchlorid oder Trichlormonofluorethan oder andere organische Lösemittel, wie beispielsweise Benzylalkohol, Dibutylphthalat, Propylenglykol, Tris(butoxyethyl)phosphat in Betracht.

Filmbildehilfsmittel, werden insbesondere eingesetzt, um die Mindestfilmbildetemperatur der Emulsionspolymerisate herabzusetzen und so zu einer guten Filmbildung beizutragen.

Die erfindungsgemäßen wässrigen Formulierungen weisen in der Regel eine Pigmentvolumenkonzentration $\geq 1$ und $\leq 60$ %, vorteilhaft $\geq 5$ und $\leq 50$ % und insbesondere vorteilhaft $\geq 10$ und $\leq 40$ % auf. Dabei wird unter der Pigmentvolumenkonzentration (PVK) das Volumen der Pigmente und der Füllstoffe multipliziert mit 100, dividiert durch das Volumen des Bindemittelpolymers plus das Volumen der Pigmente und der Füllstoffe verstanden.

$$\%\ \text{PVK} = \frac{\text{Volumen der Pigmente und Füllstoffe}}{\text{Volumen des Bindemittelpolymers + Volumen der Pigmente und Füllstoffe}}$$

Von besonderer Bedeutung ist, dass auch wässrige Formulierungen, insbesondere Beschichtungsformulierungen für spezifische Anwendungsgebiete erfindungsgemäß umfasst sein sollen, wie insbesondere

Deckende Holzlacke, enthaltend (als Feststoff gerechnet)

| | |
|---|---|
| $\geq 15$ und $\leq 60$ Gew.-% | Gesamtpolymer (= Summe aus Polymer 1 und Polymer 2) |
| $\geq 0$ und $\leq 20$ Gew.-% | Filmbildehilfsmittel |
| $\geq 1$ und $\leq 40$ Gew.-% | Pigmente |
| $\geq 0$ und $\leq 50$ Gew.-% | Füllstoffe, |
| $\geq 0{,}1$ und $\leq 5$ Gew.-% | Dispergierhilfsmittel |
| $\geq 0$ und $\leq 20$ Gew.-% | Verdicker, sowie |
| $\geq 0$ und $\leq 30$ Gew.-% | weitere Hilfsstoffe, wie Puffersubstanzen, Biozide etc., |

oder

Papierstreichmassen, enthaltend (als Feststoff gerechnet)

| | |
|---|---|
| $\geq 5$ und $\leq 15$ Gew.-% | Gesamtpolymer |
| $\geq 0$ und $\leq 8$ Gew.-% | Stärke und |
| $\geq 85$ und $\leq 95$ Gew.-% | Füllstoffe, |

jeweils bezogen auf den Feststoffgehalt der genannten wässrigen Beschichtungsformulierungen, enthalten.

Von Bedeutung ist, dass die wässrigen Formulierungen vorteilhaft mit einer Base, insbesondere Ammoniak oder wässriger Ammoniak-Lösung auf einen pH-Wert im Bereich $\geq 7{,}5$ und $\leq 10{,}0$ und besonders vorteilhaft $\geq 8{,}0$ und $\leq 9{,}0$ eingestellt werden.

Mit Vorteil werden die wässrigen Formulierungen, insbesondere Beschichtungs- bzw. Anstrichmittel zuerst auf die Oberfläche eines Substrates aufgebracht und danach bei einer Temperatur T, welche gleich oder größer ist als die Mindestfilmbildetemperatur (MFT) [T ≤ MFT] der erfindungsgemäßen wässrigen Polymerdispersion oder ihrer wässrigen Formulierung, getrocknet wird. Mit Vorteil ist die Trocknungstemperatur $T \geq (MFT + 5)$ °C, mit besonderem Vorteil $T \geq (MFT + 10)$ °C und insbesondere $T \geq (MFT + 20)$ °C.

Dabei wird im Rahmen dieser Schrift unter der MFT die nach der DIN ISO 2115 vom April 2001 experimentell ermittelte Temperatur verstanden, unterhalb derer die wässrige Polymerdispersion keinen geschlossenen Polymerfilm mehr bildet.

Erfindungsgemäß von Bedeutung ist, dass die Menge an wässriger Formulierung so gewählt wird, dass die auf das Substrat aufgebrachte Beschichtung nach der Trocknung eine Schichtdicke $\leq 2$ mm, vorteilhaft $\geq 0{,}01$ und $\leq 1{,}5$ mm und insbesondere vorteilhaft $\geq 0{,}05$ und $\leq 0{,}5$ mm aufweist. Selbstverständlich ist es erfindungsgemäß möglich, dass auf ein Substrat nacheinander zwei oder mehrere gleiche oder unterschiedliche Beschichtungsschichten aufgebracht werden können.

Erfindungsgemäß können alle natürlichen oder synthetischen, organischen oder anorganischen Substrate zur Beschichtung eingesetzt werden. In einer bevorzugten Ausführungsform werden jedoch solche Substrate bevorzugt

eingesetzt, welche eine hydrophile Oberfläche aufweisen, wie beispielsweise Metall, Glas, Porzellan, Papier, Pappe, Kunststoffe, Beton oder Holz.

Im Rahmen der vorliegenden Schrift weist ein Substrat dann eine hydrophile Oberfläche auf, wenn bei einer Temperatur von 20 °C und Atmosphärendruck (1,013 bar absolut) der Kontaktwinkel eines auf eine waagrechte ebene Oberfläche eines Substrates aufgebrachter Tropfen entionisierten Wassers, unmittelbar nach dessen Aufbringen, mit der Oberfläche des Substrates einen Kontaktwinkel < 90° ausbildet [Grenzflächenspannung des Substrates zur Umgebung ist größer als die Grenzflächenspannung des Wassers zur Umgebung].

Von Bedeutung ist ferner, dass sich die erfindungsgemäßen wässrigen Formulierungen insbesondere zur Herstellung von Beschichtungen mit hoher Lösungsmittelbeständigkeit und geringer Anschmutzneigung bzw. hoher Resistenz gegen Fleckenbildung eignen.

Die Erfindung soll anhand nachfolgender nicht einschränkender Beispiele erläutert werden.

## Beispiele

### 1 Herstellung wässriger Polymer 1-Lösungen

Die erfindungsgemäßen säurereichen Polymere P1-A bis P1-C sowie das nicht erfindungsgemäße säurereiche Polymere P1-V wurden analog der in der US-A 4529787 beschriebenen Verfahrensweise hergestellt.

Die Monomerzusammensetzungen der Polymere P1 und deren Charakterisierung sind in Tabelle 1 aufgeführt.

Tabelle 1: Monomerzusammensetzung, Molmasse, Hansch-Parameter und Tg der Polymere P1

| Polymer | Styrol [Gew.-%] | alpha-Methylstyrol [Gew.-%] | Acrylsäure [Gew.-%] | Methylmethacrylat [Gew.-%] | n-Butylacrylat [Gew.-%] | Ethylhexylacrylat [Gew.-%] | Molmasse Mw [g/mol] | Hanschparameter | Tg [°C] |
|---|---|---|---|---|---|---|---|---|---|
| P1-A | 27,5 | 0 | 10,6 | 47,9 | 14,0 | 0 | 9000 | 1,46 | 81 |
| P1-B | 31,7 | 37,1 | 31,2 | 0 | 0 | 0 | 8500 | 1,43 | 127 |
| P1-C | 15,4 | 39,0 | 20,2 | 0 | 25,4 | 0 | 7000 | 1,86 | 72 |
| P1-V | 22,7 | 35,2 | 36,2 | 0 | 0 | 5,9 | 9200 | 1,23 | 117 |

Aus den Polymeren P1-A bis P1-V wurden wie folgt ammoniakalische wässrige Lösungen hergestellt. Hierzu wurden bei Raumtemperatur (20 bis 25 °C) 700 g entionisiertes Wasser in einem Rührgefäß vorgelegt und 300 g des jeweiligen festen Polymers P1 in Pulverform portionsweise zugegeben. Anschließend wurden die in Tabelle 2 angegebene Mengen an 25 gew.-%iger wässriger Ammoniaklösung langsam der Polymersuspension zugegeben und das wässrige Polymergemisch bei Raumtemperatur für 30 min gerührt. Anschließend wurden die so erhaltenen wässrigen Polymergemische auf 80°C erhitzt und 2 Stunden bei dieser Temperatur gerührt. Nach dem Abkühlen auf Raumtemperatur und Filtration über ein 125 μm Filter wurden leicht trübe bis klare Lösungen erhalten. Die dabei erhaltenen wässrigen Polymerlösungen werden PL1-A bis PL1-C sowie PL1-V genannt.

Tabelle 2: Herstellung der Polymerlösungen

| Polymer | Zugabemenge 25 gew.-%iger wässriger Ammoniaklösung [g] | Feststoffgehalt [Gew.-%] | Bezeichnung |
|---|---|---|---|
| P1-A | 18,8 | 29,6 | PL1-A |
| P1-B | 65,2 | 29,8 | PL1-B |
| P1-C | 37,1 | 29,7 | PL1-C |
| P1-V | 73,5 | 29,5 | PL1-V |

2 Herstellung der wässrigen Polymerdispersionen

Wässrige Polymerdispersion 1 (B1)

In einem mit Dosiereinrichtungen und Temperaturregelung ausgerüsteten Polymerisationsgefäß aus Glas wurden bei Raumtemperatur unter Stickstoffatmosphäre

| | |
|---|---|
| 357,1 g | entionisiertes Wasser |
| 533,9 g | Polymerlösung PL1-A |

vorgelegt und unter Rühren auf 80 °C aufgeheizt. Bei Erreichung dieser Temperatur wurden

34,0 g einer 7 gew.-%igen wässrigen Lösung von Natriumperoxodisulfat

innerhalb von einer Minute zugegeben und danach 5 Minuten unter Aufrechterhaltung dieser Temperatur gerührt. Danach wurde Zulauf 1 während 120 Minuten kontinuierlich mit konstanter Dosierrate zudosiert. Nach Ende von Zulauf 1 wurde Zulauf 2 in einem Schuss zugegeben, anschließend wurde 60 Minuten nachpolymerisiert.

Zulauf 1 (homogene Monomermischung aus):

| | |
|---|---|
| 269,1 g | Styrol |
| 104,6 g | 2-Ethylhexylacrylat |

Zulauf 2:

25,0 g entionisiertes Wasser

Nach Beendigung der Nachpolymerisationszeit wurde die erhaltene wässrige Polymerisatdispersion auf Raumtemperatur abgekühlt, mit 0,6 g einer 5 gew.-%igen wässrigen Lösung von Acticid® MBS (ein Biozid der Firma Thor GmbH) sowie mit 16,4 g entionisiertem Wasser versetzt und über ein 125 μm Filter filtriert.

Die erhaltene wässrige Polymerdispersion 1 wies einen Feststoffgehalt von 40,0 Gew.-% und einen pH-Wert von 7,3 auf. Der gewichtsmittlere Teilchendurchmesser betrug 58 nm. Der Hansch-Parameter des aus Zulauf 1 gebildeten Polymers 2 wurde zu 3,23 berechnet. Die Glasübergangstemperatur des Polymers 2 wurde zu 39 °C bestimmt.

Die Feststoffgehalte wurden im Rahmen dieser Schrift generell bestimmt, indem eine definierte Menge der wässrigen Polymerdispersion (ca. 0,8 g) mit Hilfe des Feuchtebestimmers HR73 der Firma Mettler Toledo bei einer Temperatur von 130 °C bis zur Gewichtskonstanz getrocknet wurde. Es werden jeweils zwei Messungen durchgeführt und der Mittelwert dieser beiden Messungen angegeben.

Die gewichtsmittlere Teilchengrößen wurde generell nach ISO 13321 mit einem High Performance Particle Sizer der Fa. Malvern bei 22 °C und einer Wellenlänge von 633 nm bestimmt.

Die pH-Wertbestimmung erfolgte generell mittels einer geeichten pH Elektrode InPro® 325X der Firma Mettler-Toledo GmbH.

Die Glasübergangstemperaturen wurden generell gemäß DIN EN ISO 11357-2 (2013-09) über Differential Scanning Calorimetry (DSC) mit einer Aufheizrate von 20 K/min mittels eines DSC Q2000 der Firma TA Instruments ermittelt. Dabei wurden die Mittelpunkttemperaturen zur Bestimmung herangezogen.

Wässrige Polymerdispersion 2 (B2)

Die Herstellung der wässrigen Polymerdispersion 2 erfolgte völlig analog zur Herstellung der wässrigen Polymerdispersion 1 mit dem Unterschied, dass folgende Vorlage, Menge an Natriumperoxodisulfat, Zuläufe 1 und 2, Biozidlösung und entionisiertes Wasser verwendet wurden:

Vorlage:

| | |
|---|---|
| 143,2 g | entionisiertes Wasser |
| 571,7 g | Polymerlösung PL1-A |

Menge an 7 gew.-%iger wässriger Lösung von Natriumperoxodisulfat: 29,0 g

Zulauf 1 (homogene Mischung aus):

| | |
|---|---|
| 203,8 g | Styrol |
| 57,3 g | 2-Ethylhexylacrylat |
| 57,3 g | n-Butylacrylat |

Zulauf 2:

| | |
|---|---|
| 22,9 g | entionisiertes Wasser |

Menge an 5 gew.-%iger wässriger Lösung von Acticid® MBS: 0,6 g
Menge an entionisiertem Wasser: 15,1 g

Die erhaltene wässrige Polymerdispersion 2 wies einen Feststoffgehalt von 44,6 Gew.-% und einen pH-Wert von 7,4 auf. Der gewichtsmittlere Teilchendurchmesser betrug 80 nm. Der Hansch-Parameter des aus Zulauf 1 gebildeten Polymers 2 wurde zu 2,98 berechnet. Die Glasübergangstemperatur des Polymers 2 wurde zu 29 °C bestimmt.

Wässrige Polymerdispersion 3 (B3)

Die Herstellung der wässrigen Polymerdispersion 3 erfolgte völlig analog zur Herstellung der wässrigen Polymerdispersion 1 mit dem Unterschied, dass folgende Vorlage, Menge an Natriumperoxodisulfat, Zuläufe 1 und 2, Biozidlösung und entionisiertes Wasser verwendet wurden:

Vorlage:

| | |
|---|---|
| 87,9 g | entionisiertes Wasser |
| 653,3 g | Polymerlösung PL1-A |

Menge an 7 gew.-%iger wässriger Lösung von Natriumperoxodisulfat: 26,7 g

Zulauf 1 (homogene Mischung aus):

| | |
|---|---|
| 188,2 g | Styrol |
| 52,9 g | 2-Ethylhexylacrylat |
| 52,9 g | n-Butylacrylat |

Zulauf 2:

| | |
|---|---|
| 22,9 g | entionisiertes Wasser |

Menge an 5 gew.-%iger wässriger Lösung von Acticid® MBS: 0,6 g
Menge an entionisiertem Wasser: 15,1 g

Die erhaltene wässrige Polymerdispersion 3 wies einen Feststoffgehalt von 44,8 Gew.-% und einen pH-Wert von 7,6 auf. Der gewichtsmittlere Teilchendurchmesser betrug 83 nm. Der Hansch-Parameter des aus Zulauf 1 gebildeten Polymers 2 wurde zu 2,98 berechnet. Die Glasübergangstemperatur des Polymers 2 wurde zu 29 °C bestimmt.

Wässrige Polymerdispersion 4 (B4)

Die Herstellung der wässrigen Polymerdispersion 3 erfolgte völlig analog zur Herstellung der wässrigen Polymerdispersion 1 mit dem Unterschied, dass folgende Vorlage, Menge an Natriumperoxodisulfat, Zuläufe 1 und 2, Biozidlösung und entionisiertes Wasser verwendet wurden:

Vorlage:

| | |
|---|---|
| 226,0 g | entionisiertes Wasser |
| 641,0 g | Polymerlösung PL1-C |

Menge an 7 gew.-%iger wässriger Lösung von Natriumperoxodisulfat: 54,0 g

Zulauf 1 (homogene Mischung aus):

| | |
|---|---|
| 239,2 g | Styrol |
| 67,3 g | 2-Ethylhexylacrylat |
| 67,3 g | n-Butylacrylat |

Zulauf 2:

| | |
|---|---|
| 25,0 g | entionisiertes Wasser |

Menge an 5 gew.-%iger wässriger Lösung von Acticid® MBS: 0,6 g
Menge an entionisiertem Wasser: 16,4 g

Die erhaltene wässrige Polymerdispersion 3 wies einen Feststoffgehalt von 39,5 Gew.-% und einen pH-Wert von 7,7 auf. Der gewichtsmittlere Teilchendurchmesser betrug 70 nm. Der Hansch-Parameter des aus Zulauf 1 gebildeten Polymers 2 wurde zu 2,98 berechnet. Die Glasübergangstemperatur des Polymers 2 wurde zu 29 °C bestimmt.

Wässrige Polymerdispersion 5 (B5)

Die Herstellung der wässrigen Polymerdispersion 5 erfolgte völlig analog zur Herstellung der wässrigen Polymerdispersion 1 mit dem Unterschied, dass folgende Vorlage, Menge an Natriumperoxodisulfat, Zuläufe 1 und 2, Biozidlösung und entionisiertes Wasser verwendet wurden:

Vorlage:

| | |
|---|---|
| 216,3 g | entionisiertes Wasser |
| 533,9 g | Polymerlösung PL1-A |

Menge an 7 gew.-%iger wässriger Lösung von Natriumperoxodisulfat: 34,0 g

Zulauf 1 (homogene Mischung aus):

| | |
|---|---|
| 263,8 g | Styrol |
| 52,3 g | 2-Ethylhexylacrylat |
| 52,3 g | n-Butylacrylat |
| 5,3 g | 1,6-Hexandioldiacrylat |

Zulauf 2:

| | |
|---|---|
| 25,0 g | entionisiertes Wasser |

Menge an 5 gew.-%iger wässriger Lösung von Acticid® MBS: 0,6 g
Menge an entionisiertem Wasser: 16,4 g

Die erhaltene wässrige Polymerdispersion 5 wies einen Feststoffgehalt von 44,4 Gew.-% und einen pH-Wert von 7,6 auf. Der gewichtsmittlere Teilchendurchmesser betrug 77 nm. Der Hansch-Parameter des aus Zulauf 1 gebildeten Polymers 2 wurde zu 2,98 berechnet. Die Glasübergangstemperatur des Polymers 2 wurde zu 42 °C bestimmt.

Wässrige Polymerdispersion 6 (B6)

Die Herstellung der wässrigen Polymerdispersion 6 erfolgte völlig analog zur Herstellung der wässrigen Polymerdispersion 1 mit dem Unterschied, dass folgende Vorlage, Menge an Natriumperoxodisulfat, Zuläufe 1 und 2, Biozidlösung und entionisiertes Wasser verwendet wurden:

Vorlage:

| | |
|---|---|
| 325,1 g | entionisiertes Wasser |
| 480,5 g | Polymerlösung PL1-A |

Menge an 7 gew.-%iger wässriger Lösung von Natriumperoxodisulfat: 30,9 g

Zulauf 1 (homogene Mischung aus):

| | |
|---|---|
| 216,2 g | Styrol |
| 57,7 g | 2-Ethylhexylacrylat |
| 62,5 g | n-Butylacrylat |

Zulauf 2:

| | |
|---|---|
| 22,5 g | entionisiertes Wasser |

Menge an 5 gew.-%iger wässriger Lösung von Acticid® MBS: 0,6 g

Menge an entionisiertem Wasser: 14,8 g
sowie zusätzliche 1,2 g einer 25 gew.-%igen wässrigen Ammoniaklösung

Die erhaltene wässrige Polymerdispersion 6 wies einen Feststoffgehalt von 39,6 Gew.-% und einen pH-Wert von 8,0 auf. Der gewichtsmittlere Teilchendurchmesser betrug 94 nm. Der Hansch-Parameter des aus Zulauf 1 gebildeten Polymers 2 wurde zu 3,07 berechnet. Die Glasübergangstemperatur des Polymers 2 wurde zu 30 °C bestimmt.

Wässrige Vergleichsdispersion 1 (VB1)

Die Herstellung der wässrigen Vergleichsdispersion 1 erfolgte völlig analog zur Herstellung der wässrigen Polymerdispersion 1 mit dem Unterschied, dass folgende Vorlage, Menge an Natriumperoxodisulfat, Zuläufe 1 und 2, Biozidlösung und entionisiertes Wasser verwendet wurden:

Vorlage:

| | |
|---|---|
| 316,2 g | entionisiertes Wasser |
| 478,9 g | Polymerlösung PL1-V |

Menge an 7 gew.-%iger wässriger Lösung von Natriumperoxodisulfat: 38,3 g

Zulauf 1 (homogene Mischung aus):

| | |
|---|---|
| 269,1 g | Styrol |
| 104,6 g | 2-Ethylhexylacrylat |

Zulauf 2:

| | |
|---|---|
| 22,5 g | entionisiertes Wasser |

Menge an 5 gew.-%iger wässriger Lösung von Acticid® MBS: 0,6 g
Menge an entionisiertem Wasser: 14,8 g

Die erhaltene wässrige Vergleichsdispersion 1 wies einen Feststoffgehalt von 41,5 Gew.-% und einen pH-Wert von 7,9 auf. Der gewichtsmittlere Teilchendurchmesser betrug 350 nm. Der Hansch-Parameter des aus Zulauf 1 gebildeten Polymers 2 wurde zu 3,23 berechnet. Die Glasübergangstemperatur des Polymers 2 wurde zu 39 °C bestimmt.

Wässrige Vergleichsdispersion 2 (VB2)

Die Herstellung der wässrigen Vergleichsdispersion 2 erfolgte völlig analog zur Herstellung der wässrigen Polymerdispersion 1 mit dem Unterschied, dass folgende Vorlage, Menge an Natriumperoxodisulfat, Zuläufe 1 und 2, Biozidlösung und entionisiertes Wasser verwendet wurden:

Vorlage:

| | |
|---|---|
| 216,3 g | entionisiertes Wasser |
| 533,9 g | Polymerlösung PL1-A |

Menge an 7 gew.-%iger wässriger Lösung von Natriumperoxodisulfat: 34,0 g

Zulauf 1 (homogene Mischung aus):

| | |
|---|---|
| 261,6 g | Methylmethacrylat |
| 112,1 g | n-Butylacrylat |

Zulauf 2:

| | |
|---|---|
| 25,0 g | entionisiertes Wasser |

Menge an 5 gew.-%iger wässriger Lösung von Acticid® MBS: 0,6 g
Menge an entionisiertem Wasser: 16,4 g

Die erhaltene wässrige Vergleichsdispersion 2 wies einen Feststoffgehalt von 44,5 Gew.-% und einen pH-Wert von 7,6 auf. Der gewichtsmittlere Teilchendurchmesser betrug 78 nm. Der Hansch-Parameter des aus Zulauf 1 gebildeten Polymers 2 wurde zu 1,56 berechnet. Die Glasübergangstemperatur des Polymers 2 wurde zu 44 °C bestimmt.

Wässrige Vergleichsdispersion 3 (VB3)

Die Herstellung der wässrigen Vergleichsdispersion 3 erfolgte völlig analog zur Herstellung der wässrigen Polymerdispersion 1 mit dem Unterschied, dass folgende Vorlage, Menge an Natriumperoxodisulfat, Zuläufe 1 und 2, Biozidlösung und entionisiertes Wasser verwendet wurden:

Vorlage:

| | |
|---|---|
| 227,9 g | entionisiertes Wasser |
| 608,6 g | Polymerlösung PL1-A |

Menge an 7 gew.-%iger wässriger Lösung von Natriumperoxodisulfat: 34,3 g

Zulauf 1 (homogene Mischung aus):

| | |
|---|---|
| 115,3 g | Methylmethacrylat |
| 67,3 g | Styrol |
| 62,5 g | 2-Ethylhexylacrylat |
| 52,9 g | n-Butylacrylat |

Zulauf 2:

22,5 g entionisiertes Wasser

Menge an 5 gew.-%iger wässriger Lösung von Acticid® MBS: 0,6 g

Menge an entionisiertem Wasser: 14,8 g
sowie zusätzlich 1,9 g einer 25 gew.-%igen wässrigen Ammoniaklösung

Die erhaltene wässrige Vergleichsdispersion 3 wies einen Feststoffgehalt von 39,5 Gew.-% und einen pH-Wert von 7,6 auf. Der gewichtsmittlere Teilchendurchmesser betrug 65 nm. Der Hansch-Parameter des aus Zulauf 1 gebildeten Polymers 2 wurde zu 2,40 berechnet. Die Glasübergangstemperatur des Polymers 2 wurde zu 24 °C bestimmt.

Wässrige Vergleichsdispersion 4 (VB4)

Die Herstellung der wässrigen Vergleichsdispersion 4 erfolgte völlig analog zur Herstellung der wässrigen Polymerdispersion 1 mit dem Unterschied, dass folgende Vorlage, Menge an Natriumperoxodisulfat, Zuläufe 1 und 2, Biozidlösung und entionisiertes Wasser verwendet wurden:

Vorlage:

| | |
|---|---|
| 295,8 g | entionisiertes Wasser |
| 497,1 g | Polymerlösung PL1-B |

Menge an 7 gew.-%iger wässriger Lösung von Natriumperoxodisulfat: 38,3 g

Zulauf 1 (homogene Mischung aus):

| | |
|---|---|
| 134,5 g | Styrol |
| 100,9 g | 2-Ethylhexylacrylat |
| 100,9 g | n-Butylacrylat |

Zulauf 2:

25,0 g entionisiertes Wasser

Menge an 5 gew.-%iger wässriger Lösung von Acticid® MBS: 0,6 g

Menge an entionisiertem Wasser: 14,8 g
sowie zusätzlich 1,4 g einer 25 gew.-%igen wässrigen Ammoniaklösung

Die erhaltene wässrige Vergleichsdispersion 4 wies einen Feststoffgehalt von 40,3 Gew.-% und einen pH-Wert von 7,6 auf. Der gewichtsmittlere Teilchendurchmesser betrug 61 nm. Der Hansch-Parameter des aus Zulauf 1 gebildeten Polymers 2 wurde zu 3,04 berechnet. Die Glasübergangstemperatur des Polymers 2 wurde zu -7 °C bestimmt.

Wässrige Vergleichsdispersion 5 (VB5)

Die Herstellung der wässrigen Vergleichsdispersion 5 erfolgte völlig analog zur Herstellung der wässrigen Polymerdispersion 1 mit dem Unterschied, dass folgende Vorlage, Menge an Natriumperoxodisulfat, Zuläufe 1 und 2, Biozidlösung und entionisiertes Wasser verwendet wurden:

Vorlage:

| | |
|---|---|
| 216,3 g | entionisiertes Wasser |
| 533,9 g | Polymerlösung PL1-A |

Menge an 7 gew.-%iger wässriger Lösung von Natriumperoxodisulfat: 34,0 g

Zulauf 1 (homogene Mischung aus):

| | |
|---|---|
| 129,2 g | Methylmethacrylat |
| 129,2 g | Styrol |
| 57,7 g | 2-Ethylhexylacrylat |
| 57,7 g | n-Butylacrylat |

Zulauf 2:

| | |
|---|---|
| 25,0 g | entionisiertes Wasser |

Menge an 5 gew.-%iger wässriger Lösung von Acticid® MBS: 0,6 g
Menge an entionisiertem Wasser: 16,4 g

Die erhaltene wässrige Vergleichsdispersion 5 wies einen Feststoffgehalt von 44,6 Gew.-% und einen pH-Wert von 7,5 auf. Der gewichtsmittlere Teilchendurchmesser betrug 99 nm. Der Hansch-Parameter des aus Zulauf 1 gebildeten Polymers 2 wurde zu 2,41 berechnet. Die Glasübergangstemperatur des Polymers 2 wurde zu 38 °C bestimmt.

3 Herstellung der Lackformulierungen

Zur Herstellung der Lackformulierungen wurden die wässrigen Polymerdispersionen B1 bis B6 sowie VB1 bis VB5 unter Rühren und Zugabe von entionisiertem Wasser auf einen Feststoffgehalt von 39,0 Gew.-% eingestellt.

Daran anschließend wurden jeweils 60 g dieser so erhaltenen wässrigen Polymerdispersionen bei Raumtemperatur in einem 0,5 l fassenden Plastikbehälter mit einem Durchmesser von 80 mm vorgelegt. Zu den so vorgelegten wässrigen Polymerdispersionen wurden dann nacheinander jeweils 2,0 g Joncryl® HPD 296 der Firma BASF als Dispergiermittel, 0,7 g FoamStar® SI 2180 der Firma BASF als Entschäumer, 44,0 g Kronos® 2190 der Firma Kronos International als Titandioxid-Pigment und 0,4 g Rheovis® PU 1250 der Firma BASF als Verdicker zugegeben.

Daran anschließend wurden den so erhaltenen Formulierungen jeweils 320 g Dispergierperlen mit einem Durchmesser von 3 mm aus Kalknatronglas zugegeben und die so erhaltenen Mischungen mit einer Teflonscheibe mit einem Durchmesser von 60 mm mit einer Umfangsgeschwindigkeit von 7 m/s für 10 Minuten gerührt. Zu diesen Mischungen wurden dann noch unter weiterem Rühren 78 g der jeweiligen auf 39,0 Gew.-% verdünnten wässrigen Polymerdispersion,

12,2 g Ethylenglykolbutylether als Filmbildehilfsmittel, 0,8 g Rheovis® PU 1250 sowie 1,9 g entionisiertes Wasser gegeben. Daran anschließend wurden die jeweiligen Lackformulierungen noch mit einer 10 gew.-%igen wässrigen Ammoniaklösung auf einen pH-Wert von 8,0 bis 8,2 eingestellt. Die so erhaltenen Lackformulierungen wurden noch 5 Minuten weitergerührt und dann die Dispergierperlen abfiltriert. Vor den anwendungstechnischen Prüfungen ließ man die so erhaltenen Lackformulierungen noch wenigstens 1 Stunde ruhen.

Die so aus den wässrigen Polymerdispersionen B1 bis B6 sowie VB1 bis VB5 erhaltenen wässrigen Lackformulierungen werden im Folgenden als Lacke LB1 bis LB6 (erfindungsgemäß) sowie LVB1 bis LVB5 (nicht erfindungsgemäß) bezeichnet.

4 Anwendungstechnische Prüfungen

Die Prüfung der Chemikalienbeständigkeiten bzw. der Resistenz gegen Fleckenbildung erfolgte auf Testbrettchen, die mit den hergestellten Lacken beschichtet wurden. Hierzu wurden auf Testbrettchen aus Buche (funiert) mittels einer Kastenrakel der jeweilige Lack LB1 bis LB6 sowie LVB1 bis LVB5 in einer Schichtdicke von 150 μm (nass) aufgerakelt. Anschließend wurden die Testbrettchen für 30 Tage im Normklima (23 °C sowie 50 % relative Luftfeuchtigkeit) getrocknet. Die Prüfung der Chemikalienbeständigkeiten bzw. der Resistenz gegen Fleckenbildung erfolgte nach DIN 68861-1. Dabei wurden mit den Testflüssigkeiten getränkte Filterpapiere (Durchmesser: 3 cm; Flächengewicht: 500 $g/m^2$) auf die zu prüfende Oberfläche gelegt. Zur Unterdrückung der Verdunstung wurden kleine Plastikbecher mit einem Innendurchmesser von 3,5 cm und einer Höhe von 1,5 cm über die Filterpapiere gestellt. Als Testflüssigkeiten wurden eine 48 vol-%ige wässrige Ethanollösung sowie eine auf Raumtemperatur abgekühlte Kaffeelösung, hergestellt durch Auflösen von 2,0 g des löslichen Kaffees "Nescafe Gold" in 100 ml kochendem Leitungswasser, eingesetzt. Die mit der Alkohollösung bzw. dem Kaffee getränkten Filterpapiere wurden dann bei Raumtemperatur auf die lackierten Testbrettchen aufgelegt, die Plastikbecher übergestülpt und die Veränderung der jeweiligen Lacke bei der Alkohollösung nach 1 Stunde und bei der Kaffeelösung nach 16 Stunden (nach Entfernung der getränkten Filterpapiere) visuell bewertet. Dabei erfolgte die visuelle Bewertung nach folgendem Bewertungs-/Notensystem:

| | |
|---|---|
| Keine sichtbaren Veränderungen in Glanz und Farbe; die Struktur der Prüffläche ist nicht verändert | Note 5 |
| Gerade noch erkennbare Änderungen in Glanz und Farbe; die Struktur der Prüffläche ist nicht verändert | Note 4 |
| Leichte Veränderungen in Glanz und Farbe; die Struktur der Prüffläche ist nicht verändert | Note 3 |
| Starke Veränderungen in Glanz und Farbe; die Struktur der Prüffläche ist nicht verändert | Note 2 |
| Starke Veränderungen in Glanz und Farbe; die Struktur der Prüffläche ist verändert | Note 1 |
| Starke Veränderungen in Glanz und Farbe; die Struktur der Prüffläche ist stark verändert | Note 0 |

Für jeden Lack wurden jeweils 3 getränkte Filterpapiere mit Alkohollösung und Kaffeelösung verwendet. Die in Tabelle 3 angegeben Ergebnisse stellen die Mittelwerte dieser 3 visuellen Bewertungen dar.

Tabelle 3: Ergebnisse der visuellen Beurteilungen der Lacke LB1 bis LVB5

| Lack | Kaffee | Ethanol |
|---|---|---|
| LB1 | 5 | 4 |
| LB2 | 5 | 4 |
| LB3 | 5 | 4 |
| LB4 | 5 | 4 |
| LB5 | 5 | 4 |
| LB6 | 5 | 4 |
| LVB 1 | 3 | 2 |
| LVB2 | 3 | 1 |
| LVB3 | 3 | 1 |
| LVB4 | 2 | 2 |
| LVB5 | 3 | 2 |

Aus den Ergebnissen ist eindeutig ersichtlich, dass die mit den erfindungsgemäßen wässrigen Polymerdispersionen hergestellten Lacke ausgezeichnete Beständigkeiten gegenüber Kaffee bei gleichzeitig sehr guten Beständigkeiten gegen wässrigem Ethanol aufweisen.

## Patentansprüche

1. Verfahren zur Herstellung einer wässrigen Polymerdispersion durch radikalisch initiierte wässrige Emulsionspolymerisation, **dadurch gekennzeichnet, dass** in einem wässrigen Medium in Gegenwart wenigstens eines Polymeren 1

| | |
|---|---|
| ≤ 5,0 Gew.-% | wenigstens einer α,β-monoethylenisch ungesättigten $C_3$- bis $C_6$-Mono- oder Dicarbonsäure (Monomere A2), |
| ≥ 95 und ≤ 100 Gew.-% | wenigstens einer ethylenisch ungesättigten Verbindung, welche sich von den Monomeren A2 unterscheidet (Monomere B2), |

wobei sich die Mengen der Monomeren A2 und B2 auf 100 Gew.-% aufsummieren, radikalisch polymerisiert werden, mit der Maßgabe, dass

• die Art und Mengen der Monomeren A2 und B2 so gewählt werden, dass das daraus erhaltene Polymer 2 einen Hansch-Parameter ≥ 2,80 und eine Glasübergangstemperatur ≥ 20 °C aufweist,
• das wenigstens eine Polymere 1

| | |
|---|---|
| ≥ 3,0 und ≤ 35 Gew.-% | wenigstens einer α,β-monoethylenisch ungesättigten $C_3$- bis $C_6$-Mono- oder Dicarbonsäure (Monomere A1), und |
| ≥ 65 und ≤ 97,0 Gew.-% | wenigstens einer ethylenisch ungesättigten Verbindung, welche sich von den Monomeren A1 unterscheidet (Monomere B1), |

wobei sich die Mengen der Monomeren A1 und B1 auf 100 Gew.-% aufsummieren, in einpolymerisierter Form enthält,
• dabei die Art und Mengen der Monomeren A1 und B1 so gewählt wurden, dass das wenigstens eine Polymere 1 einen Hansch-Parameter > 1,35 aufweist, und
• das Gewichtsverhältnis des wenigstens einen Polymeren 1 zur Summe der Gesamtmengen an Monomeren A2 und B2 (Gesamtmonomerenmenge 2) im Bereich 15:85 bis 60:40 liegt.

2. Verfahren nach Anspruch 1, **dadurch gekennzeichnet, dass** die Art und Mengen der Monomeren A1 und B1 so gewählt wurden, dass das wenigstens eine Polymere 1 einen Hansch-Parameter im Bereich ≥ 1,40 und ≤ 2,00 aufweist.

3. Verfahren nach einem der Ansprüche 1 oder 2, **dadurch gekennzeichnet, dass** die Art und Mengen der Monomeren A2 und B2 so gewählt werden, dass das daraus erhaltene Polymer 2 einen Hansch-Parameter im Bereich ≥ 2,80 und ≤ 3,20 aufweist.

4. Verfahren nach einem der Ansprüche 1 bis 3, **dadurch gekennzeichnet, dass** das wenigstens eine Polymere 1

| | |
|---|---|
| ≥ 4,0 und ≤ 25 Gew.-% | wenigstens eines Monomeren A1, und |
| ≥ 75 und ≤ 96,0 Gew.-% | wenigstens eines Monomeren B1 |

in einpolymerisierter Form enthält.

5. Verfahren nach einem der Ansprüche 1 bis 4, **dadurch gekennzeichnet, dass** die Art und Mengen der Monomeren A2 und B2 so gewählt werden, dass das erhaltene Polymer 2 eine Glasübergangstemperatur ≥ 20 und ≤ 60 °C aufweist.

6. Verfahren nach einem der Ansprüche 1 bis 5, **dadurch gekennzeichnet, dass** keinerlei Monomeren A2 eingesetzt werden.

**7.** Verfahren nach einem der Ansprüche 1 bis 6, **dadurch gekennzeichnet, dass** das wenigstens eine Polymere 1 Acrylsäure und/oder Methacrylsäure als Monomere A1 und Styrol, α-Methylstyrol, Methylmethacrylat, n-Butylacrylat und/oder 2-Ethylhexylacrylat als Monomere B1 in einpolymerisierter Form enthält.

**8.** Verfahren nach einem der Ansprüche 1 bis 7, **dadurch gekennzeichnet, dass** als Monomere B2 Styrol, α-Methylstyrol, Methylmethacrylat, n-Butylacrylat und/oder 2-Ethylhexylacrylat eingesetzt werden.

**9.** Wässrige Polymerdispersion erhältlich nach einem Verfahren gemäß einem der Ansprüche 1 bis 8.

**10.** Polymerpulver erhältlich durch Trocknung einer wässrigen Polymerdispersion gemäß Anspruch 9.

**11.** Verwendung einer wässrigen Polymerdispersion gemäß Anspruch 9 oder eines Polymerpulvers gemäß Anspruch 10 als Bindemittel bei der Herstellung von Klebstoffen, Dichtmassen, Kunstharzputzen, Papierstreichmassen, Faservliesen, flexiblen Dachbeschichtungen und Anstrichmitteln sowie bei der Sandverfestigung, als Komponente bei der Herstellung von Textil- oder Lederhilfsmitteln und Schlagzähmodifier oder zur Modifizierung von mineralischen Bindemitteln und Kunststoffen.

**12.** Wässrige Formulierung, enthaltend eine wässrige Polymerdispersion gemäß Anspruch 9 und/oder ein Polymerpulver gemäß Anspruch 10 sowie wenigstens ein Pigment.

**13.** Wässrige Formulierung gemäß Anspruch 12 mit einer Pigmentvolumenkonzentration im Bereich ≥ 1 und ≤ 60 %.

**14.** Wässrige Formulierung gemäß Anspruch 12 oder 13, enthaltend Titandioxid als wenigstens ein Pigment.

**15.** Verwendung einer wässrigen Formulierung gemäß einem der Ansprüche 12 bis 14 zur Herstellung von Beschichtungen mit hoher Lösungsmittelbeständigkeit und geringer Anschmutzneigung.

## Claims

**1.** A process for producing an aqueous polymer dispersion by free-radically initiated aqueous emulsion polymerization, which comprises free-radically polymerizing, in an aqueous medium, in the presence of at least one polymer 1,

≤ 5.0% by weight of at least one α,β-monoethylenically unsaturated $C_3$ to $C_6$ mono- or dicarboxylic acid (monomers A2),
≥ 95% and ≤ 100% by weight of at least one ethylenically unsaturated compound other than the monomers A2 (monomers B2),
where the amounts of monomers A2 and B2 add up to 100% by weight,
with the proviso that

- the nature and amounts of monomers A2 and B2 are chosen such that the polymer 2 obtained therefrom has a Hansch parameter ≥ 2.80 and a glass transition temperature ≥ 20°C,
- the at least one polymer 1 comprises, in copolymerized form,

≥ 3.0% and ≤ 35% by weight of at least one α,β-monoethylenically unsaturated $C_3$ to $C_6$ mono- or dicarboxylic acid (monomers A1), and
≥ 65% and ≤ 97.0% by weight of at least one ethylenically unsaturated compound other than the monomers A1 (monomers B1),
where the amounts of monomers A1 and B1 add up to 100% by weight,

- the nature and amounts of monomers A1 and B1 have been chosen here such that the at least one polymer 1 has a Hansch parameter > 1.35, and
- the weight ratio of the at least one polymer 1 to the sum of the total amounts of monomers A2 and B2 (total amount of monomers 2) is in the range of 15:85 to 60:40.

**2.** The process according to claim 1, wherein the nature and amounts of monomers A1 and B1 have been chosen such that the at least one polymer 1 has a Hansch parameter in the range of ≥ 1.40 and ≤ 2.00.

3. The process according to either of claims 1 and 2, wherein the nature and amounts of monomers A2 and B2 are chosen such that the polymer 2 obtained therefrom has a Hansch parameter in the range of ≥ 2.80 and ≤ 3.20.

4. The process according to any of claims 1 to 3, wherein the at least one polymer 1 comprises, in copolymerized form,

≥ 4.0% and ≤ 25% by weight of at least one monomer A1, and
≥ 75% and ≤ 96.0% by weight of at least one monomer B1.

5. The process according to any of claims 1 to 4, wherein the nature and amounts of monomers A2 and B2 are chosen such that the polymer 2 obtained has a glass transition temperature of ≥ 20°C and ≤ 60°C.

6. The process according to any of claims 1 to 5, wherein no monomers A2 at all are used.

7. The process according to any of claims 1 to 6, wherein the at least one polymer 1 comprises, in copolymerized form, acrylic acid and/or methacrylic acid as monomers A1, and styrene, α-methylstyrene, methyl methacrylate, n-butyl acrylate and/or 2-ethylhexyl acrylate as monomers B1.

8. The process according to any of claims 1 to 7, wherein the monomers B2 used are styrene, α-methylstyrene, methyl methacrylate, n-butyl acrylate and/or 2-ethylhexyl acrylate.

9. An aqueous polymer dispersion obtainable by a process according to any of claims 1 to 8.

10. A polymer powder obtainable by drying an aqueous polymer dispersion according to claim 9.

11. The use of an aqueous polymer dispersion according to claim 9 or of a polymer powder according to claim 10 as binder in the production of adhesives, sealants, renders, paper coating slips, fiber nonwovens, flexible roof coatings and paints, and in sand consolidation, as a component in the production of textile or leather auxiliaries and impact modifiers, or for modification of mineral binders and plastics.

12. An aqueous formulation comprising an aqueous polymer dispersion according to claim 9 and/or a polymer powder according to claim 10 and at least one pigment.

13. The aqueous formulation according to claim 12 having a pigment volume concentration in the range of ≥ 1% and ≤ 60%.

14. The aqueous formulation according to claim 12 or 13, comprising titanium dioxide as at least one pigment.

15. The use of an aqueous formulation according to any of claims 12 to 14 for production of coatings having high solvent stability and a low tendency to soiling.

**Revendications**

1. Procédé de préparation d'une dispersion aqueuse de polymère par polymérisation en émulsion aqueuse initiée de manière radicalaire, **caractérisé en ce que**, dans un milieu aqueux en présence d'au moins un polymère 1

≤ 5,0 % en poids d'au moins un acide monocarboxylique ou dicarboxylique monoéthyléniquement α,β-insaturé en $C_3$ à $C_6$ (monomères A2),
≥ 95 et ≤ 100 % en poids d'au moins un composé éthyléniquement insaturé qui est différent des monomères A2 (monomères B2),
les quantités des monomères A2 et B2 totalisant 100 % en poids, sont polymérisés de manière radicalaire, à la condition que

- la sorte et les quantités des monomères A2 et B2 soient choisies de sorte que le polymère 2 obtenu à partir de ceux-ci présente un paramètre Hansch ≥ 2,80 et une température de transition vitreuse ≥ 20 °C,
- l'au moins un polymère 1 contienne sous forme polymérisée

≥ 3,0 et ≤ 35 % en poids d'au moins un acide monocarboxylique ou dicarboxylique monoéthyléniquement α,β-

insaturé en $C_3$ à $C_6$ (monomères A1), et
≥ 65 et ≤ 97,0 % en poids d'au moins un composé éthyléniquement insaturé qui est différent des monomères A1 (monomères B1),
les quantités des monomères A1 et B1 totalisant 100 % en poids,

- à cet égard la sorte et les quantités des monomères A1 et B1 soient choisies de sorte que l'au moins un polymère 1 présente un paramètre Hansch > 1,35, et
- le rapport en poids de l'au moins un polymère 1 sur la somme des quantités totales A2 et B2 (quantité totale 2 de monomères) se situe dans la plage de 15 : 85 à 60 : 40.

**2.** Procédé selon la revendication 1, **caractérisé en ce que** la sorte et les quantités des monomères A1 et B1 ont été choisies de sorte que l'au moins un polymère 1 présente un paramètre Hansch dans la plage de ≥ 1,40 et ≤ 2,00.

**3.** Procédé selon l'une quelconque des revendications 1 et 2, **caractérisé en ce que** la sorte et les quantités des monomères A2 et B2 sont choisies de sorte que le polymère 2 obtenu à partir de ceux-ci présente un paramètre Hansch dans la plage de ≥ 2,80 et ≤ 3,20.

**4.** Procédé selon l'une quelconque des revendications 1 à 3, **caractérisé en ce que** l'au moins un polymère 1 contient

≥ 4,0 et ≤ 25 % en poids d'au moins un monomère A1, et
≥ 75 et ≤ 96,0 % en poids d'au moins un monomère B1 sous forme polymérisée.

**5.** Procédé selon l'une quelconque des revendications 1 à 4, **caractérisé en ce que** la sorte et les quantités des monomères A2 et B2 sont choisies de sorte que le polymère 2 obtenu présente une température de transition vitreuse ≥ 20 et ≤ 60 °C.

**6.** Procédé selon l'une quelconque des revendications 1 à 5, **caractérisé en ce qu'**aucun monomère A2 n'est utilisé.

**7.** Procédé selon l'une quelconque des revendications 1 à 6, **caractérisé en ce que** l'au moins un polymère 1 contient de l'acide acrylique et/ou de l'acide méthacrylique en tant que monomères A1 et du styrène, de l'$\alpha$-méthylstyrène, du méthacrylate de méthyle, de l'acrylate de n-butyle et/ou de l'acrylate de 2-éthylhexyle en tant que monomères B1 sous forme polymérisée.

**8.** Procédé selon l'une quelconque des revendications 1 à 7, **caractérisé en ce qu'**en tant que monomères B2 du styrène, de l'$\alpha$-méthylstyrène, du méthacrylate de méthyle, de l'acrylate de n-butyle et/ou de l'acrylate de 2-éthylhexyle sont utilisés.

**9.** Dispersion aqueuse de polymère pouvant être obtenue par un procédé selon l'une quelconque des revendications 1 à 8.

**10.** Poudre de polymère pouvant être obtenue par séchage d'une dispersion aqueuse de polymère selon la revendication 9.

**11.** Utilisation d'une dispersion aqueuse de polymère selon la revendication 9 ou d'une poudre de polymère selon la revendication 10 en tant que liant lors de la préparation d'adhésifs, de masses d'étanchéité, d'enduits de résine synthétique, de masses de couchage pour papier, de non-tissés fibreux, de revêtements de toits flexibles et de peintures ainsi que dans la consolidation de sable, comme composant dans la préparation d'adjuvants pour textiles ou cuirs et de modificateurs d'impact ou pour la modification de liants minéraux et de matières plastiques.

**12.** Formulation aqueuse, contenant une dispersion aqueuse de polymère selon la revendication 9 et/ou une poudre de polymère selon la revendication 10 ainsi qu'au moins un pigment.

**13.** Formulation aqueuse selon la revendication 12 dotée d'une concentration volumique en pigment dans la plage de ≥ 1 à ≤ 60 %.

**14.** Formulation aqueuse selon la revendication 12 ou 13, contenant du dioxyde de titane en tant qu'au moins un pigment.

**15.** Utilisation d'une formulation aqueuse selon l'une quelconque des revendications 12 à 14 pour la préparation de

revêtements dotés d'une résistance élevée aux solvants et d'une tendance à l'encrassement réduite.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 386325 A
- EP 574803 A
- EP 1333074 A
- US 200875868 A
- DE 3225876 A
- US 4013607 A
- US 4414770 A
- US 4529787 A
- US 4546160 A
- EP 1732962 A
- DE 4003422 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A
- US 4269749 A


### In der Beschreibung aufgeführte Nicht-Patentliteratur


- **HANSCH, FUJITA.** *J. Amer. Chem. Soc.,* 1964, vol. 86, 1616-1626
- **H. KUBINYI et al.** Methods and Principles of Medicinal Chemistry. VCH, 1993, vol. 1
- Substituent Constants for Correlation Analysis. **C. HANSCH ; A. LEO.** Chemistry and Biology. Wiley, 1979
- **C. HANSCH ; P. MALONEY ; T. FUJITA ; R. MUIR.** *Nature,* 1962, vol. 194, 178-180
- **T.G. FOX.** *Bull. Am. Phys. Soc.,* 1956, vol. 1, 123
- Ullmann’s Encyclopädie der technischen Chemie. Verlag Chemie, 1980, vol. 19, 18
- **J. BRANDRUP ; E.H. IMMERGUT.** Polymer Handbook. J. Wiley, 1966
- Polymer Handbook. J. Wiley, 1975
- Polymer Handbook. J. Wiley, 1989
- Ullmann’s Cncyclopedia of Industrial Chemistry. Verlag Chemie, 1992, 169
- *Polymer Science and Engineering,* 1987, vol. 8, 659
- **D.C. BLACKLEY.** *High Polymer Latices,* 1966, vol. 1, 35
- **H. WARSON.** *The Applications of Synthetic Resin Emulsions,* 1972, 246
- **D. DIEDERICH.** *Chemie in unserer Zeit,* 1990, vol. 24, 135-142
- Emulsion Polymerisation. Interscience Publishers, 1965
- **F. HÖLSCHER.** Dispersionen synthetischer Hochpolymerer. Springer-Verlag, 1969
- **J. BRANDRUP ; E.H. IMMERGUT.** Polymerhandbook. John Weley & Sons, 1989, 133-141
- **HOUBEN-WEYL.** Methoden der organischen Chemie. Georg-Thieme-Verlag, 1961, vol. XIV/1, 411-420
- **HOUBEN-WEYL.** Methoden der organischen Chemie. Georg-Thieme-Verlag, 1961, vol. XIV/1, 192-208
- Römpp Chemie Lexikon. Georg Thieme Verlag, 1995